# EUROPEAN PATENT APPLICATION

(11) **EP 4 792 902 A1**
(43) Date of publication of application: **19.08.2026**
(21) Application number: 26157792.8
(22) Date of filing: 11.02.2026
(51) Int. Cl.: A63F 13/47, A63F 13/493

(54) **AUTOMATIC PINCH POINT GENERATION IN INTERACTIVE GAMES**

(30) Priority: 13.02.2025 US 202563758258 P; 29.01.2026 US 202619464487
(71) Applicant: Skydance Silicon Valley, LLC, Santa Monica, California 90404 (US)
(72) Inventor: BEAK, Julian Anthony, Santa Monica, 90404 (US); RIDOUT, Ryan David, Santa Monica, 90404 (US)
(74) Representative: Gevers Patents

(57) **Abstract**

Systems and methods for automatic pinch point generation and timeline control within an interactive game are disclosed. The system analyzes game data, narrative flow and gameplay challenges, to identify contained areas where player progression converges, such as cutscenes or boss battles. Pinch points serve as stable markers for bi-directional navigation, allowing players to scrub forward or backward through the game's narrative. When a user interacts with a timeline overlay, the system calculates a target timestamp and snaps to the nearest valid pinch point to ensure a stable game state. This process involves dynamically unloading active assets and initializing new assets, physics, and enemy states associated with the target location. Furthermore, the system can adapt the timeline presentation based on player data, masking spoilers for new users or highlighting specific challenges for certain players like speedrunners, thereby enhancing accessibility and ensuring players can experience the full narrative regardless of skill level.

## Description

### PRIORITY

This application claims the benefit of, and priority to U.S. Provisional Application, entitled "Automatic Pinch Point Generation In Interactive Games," filed on February 13, 2025 and having application serial number 63/758,258, the entirety of each of said application being incorporated herein by reference.

### FIELD

The present disclosure relates to interactive games. More particularly, the present disclosure relates to utilizing a bi-directional timeline system with automatic pinch point generation within an interactive game.

### BACKGROUND

Traditionally, video games have employed linear progression systems that require players to advance through a series of challenges, puzzles, or enemies in a specific, predetermined order. This structure is often designed to gradually increase in difficulty, ensuring that players master the mechanics and skills needed to succeed as they progress. Key milestones within this structure, such as boss fights or complex puzzles, serve as gatekeepers, testing a player's abilities before allowing them to move forward. While this approach can create a sense of accomplishment and immersion, it can also be restrictive, as it demands that players successfully complete each segment to unlock the next phase of the game. Consequently, those who encounter difficulty with particular segments may find themselves unable to proceed, often leading to frustration and, in some cases, abandonment of the game altogether.

This challenge becomes particularly pronounced when players are faced with especially demanding obstacles, such as formidable boss battles that require precise timing, strategy, or mastery of complex mechanics. Not all players have the same level of skill, experience, or time to devote to overcoming such hurdles, which can result in a disproportionate number of players being unable to progress past these barriers. Additionally, other factors, such as disabilities, age, available time, or simply personal preference for different game genres, may further hinder a player's ability to surmount these challenges. As a result, these traditional progression barriers can unintentionally exclude a sizeable segment of the potential player base, preventing them from accessing the full experience and enjoyment that the game has to offer, and making the game less marketable.

Furthermore, implementing non-linear navigation in interactive media presents unique technical challenges compared to linear media like video. While a video player can typically "scrub" to any specific frame, a video game engine must render complex states in real-time, including physics calculations, enemy AI behaviors, and variable tracking. Consequently, forcing a game to load at an arbitrary timestamp often results in invalid game states, graphical glitches, or logic errors, making true "scrubbing" computationally prohibitive or unstable.

To mitigate this, developers traditionally rely on manually placed "checkpoints" or "save states." However, identifying and designating these safe entry points is a labor-intensive process that requires significant quality assurance testing to ensure the game state loads correctly. As game narratives become more complex with branching paths and dynamic events, the manual effort required to map out these safe "pinch points" increases exponentially, often limiting the granularity of control available to the player.

### BRIEF DESCRIPTION OF DRAWINGS

The above, and other, aspects, features, and advantages of several embodiments of the present disclosure will be more apparent from the following description as presented in conjunction with the following several figures of the drawings.
FIG. 1 is a video game ecosystem in accordance with various embodiments of the disclosure;
FIG. 2 is a conceptual block diagram of a device suitable for configuration with a timeline control logic, in accordance with various embodiments of the disclosure;
FIG. 3 is an abstract block diagram of the components of a timeline control system in accordance with various embodiments of the disclosure;
FIG. 4 is an abstract block diagram of the data within a storage of a timeline control system in accordance with various embodiments of the disclosure;
FIG. 5 is a conceptual illustration of an interactive gameplay flow through a plurality of pinch points in accordance with various embodiments of the disclosure;
FIG. 6 is a conceptual illustration of a timeline overlay within gameplay in accordance with various embodiments of the disclosure;
FIG. 7 is a conceptual illustration of a plurality of gameplay modes in accordance with various embodiments of the disclosure;
FIG. 8 is a process for automatically generating pinch points in accordance with various embodiments of the disclosure;
FIG. 9 is a diagram depicting various subsets of artificial intelligence in accordance with various embodiments of the disclosure;
FIG. 10 is a conceptual illustration of different methods of machine-based learning in accordance with various embodiments of the disclosure;
FIG. 11 is a conceptual illustration of a machine learning lifecycle in accordance with various embodiments of the disclosure;
FIG. 12 is an exemplary neural network for use in a player control system in accordance with various embodiments of the disclosure;
FIG. 13 is a flowchart showing a process for runtime scrubbing and asset reset in accordance with various embodiments of the disclosure;
FIG. 14 is a flowchart showing a process for adaptive timeline generation based on player data in accordance with various embodiments of the disclosure; and
FIG. 15 is a flowchart showing a process for focus moment enforcement during navigation in accordance with various embodiments of the disclosure.

Corresponding reference characters indicate corresponding components throughout the several figures of the drawings. Elements in the several figures are illustrated for simplicity and clarity and have not necessarily been drawn to scale. For example, the dimensions of some of the elements in the figures might be emphasized relative to other elements for facilitating understanding of the various presently disclosed embodiments. In addition, common, but well-understood, elements that are useful or necessary in a commercially feasible embodiment are often not depicted in order to facilitate a less obstructed view of these various embodiments of the present disclosure.

### DETAILED DESCRIPTION

In response to the problems outlined above, embodiments of the disclosure described herein can utilize a bi-directional game system wherein the timeline can be triggered and utilized by a user to change the current game state to one previously played or one that has yet to occur. In a number of embodiments, a timeline system within an interactive game is configured as a feature that allows players to navigate through different moments of the game's narrative and gameplay, providing them with a greater sense of control over how they experience the story and challenges. This system may typically be presented as a visual timeline overlay that appears on the screen, often as a bar at the bottom or top, with markers indicating key events, cutscenes, gameplay milestones, and pivotal moments that the player has encountered or can access. Players can interact with this timeline by dragging a marker or scrubber forward or backward, allowing them to revisit past scenes, replay challenging segments, or skip ahead to future content that they might find more interesting or relevant. The timeline system can be especially useful for players who wish to retry sections to improve their performance, collect missed items, or explore different narrative choices without having to start the game from scratch.

In many embodiments, the timeline system can be integrated with various elements of the interactive game such as the game engine, asset management, and narrative progression to ensure that the experience remains seamless and immersive. As players move through the timeline, the system can interact with various logics such as, but not limited to, scrubbing logic, which can be configured to manage how the game's state is adjusted to reflect the exact moment the player has chosen. In additional embodiments, this can involve resetting character positions, events, enemy behaviors, and dialogue to match the conditions at that specific point, as well as loading or unloading necessary assets to ensure smooth transitions. Additionally, a pinch point logic can further be configured to ensure that key story events or gameplay moments that are crucial to the narrative are experienced by the player, even when they choose to jump around the timeline, preserving the integrity of the story and preventing players from accidentally missing important content.

Various embodiments of the timeline system described herein can also play a significant role in enhancing the overall accessibility and flexibility of the game. For players who may find certain segments too difficult, want to focus more on the narrative, or simply have limited time to invest, the ability to navigate through the timeline provides an option to engage with the game at their own pace. This feature can provide a game means to cater to a wide variety of player preferences, from those who enjoy perfecting their gameplay to those who are primarily interested in experiencing the story. By allowing players to control how they interact with different parts of the game, the timeline system can enrich the overall gaming experience, making it more personalized, dynamic, and inclusive, regardless of the player's skill level or play style.

In various embodiments, this configuration of the timeline system can also enhance the overall fluidity and immersion of the gaming experience, as players can transition smoothly between different types of scenes without feeling restricted or disconnected from the story. By allowing the timeline to dynamically adjust to the current game mode, the system may provide that players are empowered to navigate their journey in a way that best suits their needs, preferences, and pace. This adaptability not only makes the game more accessible to a wider range of players but also enhances replayability, as players can easily revisit specific moments, experiment with different choices, or share memorable scenes with others.

In many embodiments described herein, a system for automatically generating pinch point suggestions is provided that can help game developers to streamline the process of marking critical moments in a game. By analyzing game data, such as narrative flow, gameplay challenges, and cutscenes, various embodiments of the system can identify key points where all players must pass through to progress, known as pinch points. These may be moments that are crucial for understanding the story, experiences related to essential gameplay elements, or transitions between major sections of the game. Instead of manually reviewing and marking these points, developers can rely on the embodiments described herein to automatically generate pinch point suggestions based on predetermined criteria. This can provide an initial framework of pinch points, allowing the development team to review and refine them as needed, saving significant time in the game development cycle.

For example, a developer working on an action-adventure game could use this system to automatically flag all major boss battles, key cutscenes, and narrative decision points as potential pinch points. The system would package these moments together into a comprehensive timeline, showing exactly where in the game these critical events occur. Instead of manually tracking each boss fight or cutscene, the developer can quickly review the system's suggestions, approve them, and integrate them into the game's structure. These embodiments can free up time for the developer to focus on other tasks, such as refining gameplay mechanics, polishing visual elements, or improving player immersion, rather than spending valuable development time manually identifying and marking each important moment in the game.

Additionally, the system's automated process can help ensure consistency throughout the game, reducing the risk of missing important pinch points that might otherwise be overlooked in manual processes. Developers can also use various embodiments of the system to tailor the generated pinch points by adjusting criteria or rules, ensuring that the suggestions align with their creative vision. This means that the system can not only provide time savings but also offer a flexible framework that developers can adapt as the game evolves. Ultimately, by automating the generation of pinch points, the embodiments described herein can enable developers to create more structured, cohesive games while maintaining creative control over how and when key moments are highlighted for the player.

In response to the rigid nature of traditional game progression where difficulty spikes can often block access to narrative content, embodiments of the present disclosure provide a system that grants players unprecedented control over their interactive experience . By moving away from strict linearity, the disclosed technology allows users to navigate through a game's timeline in a manner similar to how one might scrub through a digital video file, effectively decoupling narrative consumption from gameplay skill requirements . This approach addresses the significant barrier of entry for players who may lack the time or specific twitch-reflex skills to overcome punishing boss battles or complex puzzles but still wish to experience the underlying story . Furthermore, this system ensures that the substantial investment developers make in crafting intricate narratives and detailed world-building is not wasted on a player base that might otherwise abandon the game before reaching the conclusion.

To facilitate this bi-directional navigation within the complex environment of an interactive game engine, the system utilizes a specialized logic to manage game states that are far more intricate than simple video frames . Unlike linear media, a game engine cannot simply jump to an arbitrary timestamp without risking physics errors, broken artificial intelligence logic, or corrupted memory states. To solve this technical hurdle, the disclosed embodiments introduce the concept of "pinch points," which serve as designated, stable convergence markers where the game state can be safely saved, loaded, or reset. By restricting the player's timeline navigation to "snap" to these valid pinch points, the system ensures technical stability and consistent logical flow while maintaining the illusion of seamless, free-form scrubbing for the user.

Recognizing that manually tagging every potential safe entry point in a massive open-world or narrative-heavy game would be prohibitively labor-intensive, the disclosure further provides for the automatic generation of these pinch points. The system can be configured to analyze vast amounts of game data, including narrative flow, cutscene triggers, and gameplay bottlenecks, to intelligently identify the optimal locations for these markers. For example, the system might detect the precise gap between lines of dialogue in a cutscene or the transition moment before a boss fight begins and automatically flag these specific frames as valid pinch points . This automation allows developers to implement a robust timeline control system without adding significant overhead to their development cycle, ensuring that the feature is scalable even for the largest and most complex projects.

When a player interacts with the timeline interface to jump to a different section of the game, the underlying control logic orchestrates a complex series of asset management tasks to ensure a smooth transition . The system immediately identifies the target pinch point and begins the process of unloading the assets associated with the current scene, such as textures, models, and audio files that are no longer needed . Simultaneously, the logic pre-loads the specific assets required for the target destination, resetting enemy behaviors, physics calculations, and environmental states to match the exact moment selected by the player. This dynamic management allows players to replay favorite moments, retry failed challenges, or skip ahead to new content with minimal friction or loading delays, significantly enhancing the replayability of the title.

Beyond simple navigation, the timeline system is capable of adapting to the specific profile and preferences of the individual player to enhance the gaming experience. The system can utilize historical progression data to mask potential spoilers for a player experiencing the story for the first time, while simultaneously offering detailed shortcuts and performance stats for a speedrunner looking to optimize their playthrough . Furthermore, to preserve the integrity of the narrative, the system can enforce "focus moments" where navigation is temporarily restricted to ensure that critical plot twists or essential tutorials are not accidentally skipped . This adaptive approach ensures that the timeline feature empowers the player to consume the content at their own pace without undermining the developer's creative vision or the emotional impact of the story.

Often, a pinch point can be understood as a specific, critical moment within the narrative or gameplay structure of an interactive game where the experience converges to a unified state for all players, regardless of their previous choices or actions . Unlike open gameplay segments where players might be in various locations or engaged in different optional side quests, a pinch point represents a bottleneck or anchor within the game's progression, such as the start of a major cutscene, the initiation of a boss battle, or a transition between distinct levels. From a narrative perspective, these points ensure that essential plot developments are delivered to every user, maintaining the coherence of the storyline. From a technical perspective, these locations serve as stable, predictable states where the game engine can reliably save, load, or reset the environment without the risk of logic errors or physics glitches that might occur in more chaotic, free-form gameplay scenarios.

In various embodiments, pinch points are utilized as the fundamental nodes for a timeline control system, allowing players to navigate through the game's content in a non-linear fashion. Because these moments are guaranteed to exist for every player, they act as safe "snap-to" targets when a user attempts to scrub through the timeline, ensuring that the game always resumes from a logical and technically sound position . The generation of these points can be automated by analyzing game data to identify where branching paths funnel back into a single track or where dialogue sequences contain natural pauses, thereby creating a map of safe entry points without requiring developers to manually tag every frame of the game. This automated identification process allows for a granular level of control, enabling players to skip specific lines of dialogue or retry specific segments of a battle with precision.

Those skilled in the art will recognize that game state refers to the comprehensive aggregate of all variables, data points, and dynamic conditions that define the exact status of an interactive game at any given millisecond. This encompasses a vast array of information, including the precise 3D coordinates and rotational orientation of the player character, the current health and inventory values, the status of all active quests or objectives, and the artificial intelligence behaviors of every enemy or non-player character in the scene . Furthermore, the game state tracks environmental factors such as the time of day, weather conditions, physics calculations for moving objects, and the destruction state of breakable assets. Unlike a video file which is a static sequence of images, the game state is a fluid, computational environment that is constantly being updated by the game engine in response to user inputs and internal logic.

In the context of a timeline control system, managing the game state is significantly more complex than simply rewinding a video, as the system must be able to instantly reconstruct the entire simulation at the selected target moment. When a player chooses to revisit a previous section, the system must revert the game state to match the conditions of that past moment, which may involve respawning defeated enemies, resetting completed objectives, and moving characters back to their original starting positions. Conversely, if a player skips ahead, the system must simulate or apply the changes that would have occurred, such as marking quests as complete or removing items from the world. This requires sophisticated serialization and data management to ensure that the transition is seamless and that the game does not crash or exhibit erratic behavior due to conflicting state variables.

In various embodiments, scrubbing generally refers to the action of interacting with a timeline interface to rapidly move the playback position forward or backward through the game's content. In traditional linear media, this is a smooth, continuous process, but in an interactive game, scrubbing involves a complex background process of data management and asset streaming. As the player drags the marker or play head along the timeline overlay, the system is continuously calculating the target timestamp and determining the nearest valid entry point to which the game can snap. This interaction allows players to bypass content they find difficult or uninteresting, or to replay specific segments to uncover missed details or improve their performance scores.

The technical implementation of scrubbing in a game environment often requires the system to dynamically preview content while managing system resources to prevent lag or stuttering. As the user scrubs through the timeline, the system may display thumbnail previews or low-resolution snapshots of the game world to provide visual context for the selected time. Once the user releases the control to select a specific point, the scrubbing logic triggers the unloading of current assets and the initialization of the new scene, resetting the physics and camera perspectives to match the chosen pinch point. This mechanic transforms the rigid, linear experience of a standard video game into a flexible, user-controlled environment, empowering players to consume the narrative and gameplay at their own pace.

Those skilled in the art will recognize that a game engine serves as the core software framework that facilitates the development and execution of the interactive game, acting as the bridge between the raw assets and the hardware of the gaming device. The engine is responsible for a multitude of essential tasks, including rendering 2D or 3D graphics, calculating physics simulations for object collisions and gravity, processing audio signals, and managing the artificial intelligence logic that drives non-player characters. It provides the underlying architecture that allows different modules, such as the timeline control logic and the asset management systems, to communicate and function in unison.

In the context of the present disclosure, the game engine plays a pivotal role in handling the "heavy lifting" required to support bi-directional timeline navigation. It receives instructions from the timeline control logic regarding which assets need to be loaded or unloaded and executes the necessary commands to render the target scene in real-time. The engine also manages the synchronization of cutscenes, ensuring that animations, voice-overs, and camera movements are perfectly timed even when a player jumps into the middle of a cinematic sequence . Furthermore, the engine abstracts the complexities of the specific hardware platform, whether it be a console, PC, or mobile device, ensuring that the timeline features perform consistently across the entire ecosystem.

Aspects of the present disclosure may be embodied as an apparatus, system, method, or computer program product. Accordingly, aspects of the present disclosure may take the form of an entirely hardware embodiment, an entirely software embodiment (including firmware, resident software, micro-code, or the like) or an embodiment combining software and hardware aspects that may all generally be referred to herein as a "function," "module," "apparatus," or "system.". Furthermore, aspects of the present disclosure may take the form of a computer program product embodied in one or more non-transitory computer-readable storage media storing computer-readable and/or executable program code. Many of the functional units described in this specification have been labeled as functions, in order to emphasize their implementation independence more particularly. For example, a function may be implemented as a hardware circuit comprising custom VLSI circuits or gate arrays, off-the-shelf semiconductors such as logic chips, transistors, or other discrete components. A function may also be implemented in programmable hardware devices such as via field programmable gate arrays, programmable array logic, programmable logic devices, or the like.

Functions may also be implemented at least partially in software for execution by various types of processors. An identified function of executable code may, for instance, comprise one or more physical or logical blocks of computer instructions that may, for instance, be organized as an object, procedure, or function. Nevertheless, the executables of an identified function need not be physically located together but may comprise disparate instructions stored in different locations which, when joined logically together, comprise the function and achieve the stated purpose for the function.

Indeed, a function of executable code may include a single instruction, or many instructions, and may even be distributed over several different code segments, among different programs, across several storage devices, or the like. Where a function or portions of a function are implemented in software, the software portions may be stored on one or more computer-readable and/or executable storage media. Any combination of one or more computer-readable storage media may be utilized. A computer-readable storage medium may include, for example, but not limited to, an electronic, magnetic, optical, electromagnetic, infrared, or semiconductor system, apparatus, or device, or any suitable combination of the foregoing, but would not include propagating signals. In the context of this document, a computer readable and/or executable storage medium may be any tangible and/or non-transitory medium that may contain or store a program for use by or in connection with an instruction execution system, apparatus, processor, or device.

Computer program code for carrying out operations for aspects of the present disclosure may be written in any combination of one or more programming languages, including an object-oriented programming language such as Python, Java, Smalltalk, C++, C#, Objective C, or the like, conventional procedural programming languages, such as the "C" programming language, scripting programming languages, and/or other similar programming languages. The program code may execute partly or entirely on one or more of a user's computer and/or on a remote computer or server over a data network or the like.

A component, as used herein, comprises a tangible, physical, non-transitory device. For example, a component may be implemented as a hardware logic circuit comprising custom VLSI circuits, gate arrays, or other integrated circuits; off-the-shelf semiconductors such as logic chips, transistors, or other discrete devices; and/or other mechanical or electrical devices. A component may also be implemented in programmable hardware devices such as field programmable gate arrays, programmable array logic, programmable logic devices, or the like. A component may comprise one or more silicon integrated circuit devices (e.g., chips, die, die planes, packages) or other discrete electrical devices, in electrical communication with one or more other components through electrical lines of a printed circuit board (PCB) or the like. Each of the functions and/or modules described herein, in certain embodiments, may alternatively be embodied by or implemented as a component.

A circuit, as used herein, comprises a set of one or more electrical and/or electronic components providing one or more pathways for electrical current. In certain embodiments, a circuit may include a return pathway for electrical current, so that the circuit is a closed loop. In another embodiment, however, a set of components that does not include a return pathway for electrical current may be referred to as a circuit (e.g., an open loop). For example, an integrated circuit may be referred to as a circuit regardless of whether the integrated circuit is coupled to ground (as a return pathway for electrical current) or not. In various embodiments, a circuit may include a portion of an integrated circuit, an integrated circuit, a set of integrated circuits, a set of non-integrated electrical and/or electrical components with or without integrated circuit devices, or the like. In one embodiment, a circuit may include custom VLSI circuits, gate arrays, logic circuits, or other integrated circuits; off-the-shelf semiconductors such as logic chips, transistors, or other discrete devices; and/or other mechanical or electrical devices. A circuit may also be implemented as a synthesized circuit in a programmable hardware device such as field programmable gate array, programmable array logic, programmable logic device, or the like (e.g., as firmware, a netlist, or the like). A circuit may comprise one or more silicon integrated circuit devices (e.g., chips, die, die planes, packages) or other discrete electrical devices, in electrical communication with one or more other components through electrical lines of a printed circuit board (PCB) or the like. Each of the functions and/or modules described herein, in certain embodiments, may be embodied by or implemented as a circuit.

Reference throughout this specification to "one embodiment," "an embodiment," or similar language means that a particular feature, structure, or characteristic described in connection with the embodiment is included in at least one embodiment of the present disclosure. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to", unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise.

Further, as used herein, reference to reading, writing, storing, buffering, and/or transferring data can include the entirety of the data, a portion of the data, a set of the data, and/or a subset of the data. Likewise, reference to reading, writing, storing, buffering, and/or transferring non-host data can include the entirety of the non-host data, a portion of the non-host data, a set of the non-host data, and/or a subset of the non-host data.

Lastly, the terms "or" and "and/or" as used herein are to be interpreted as inclusive or meaning any one or any combination. Therefore, "A, B or C" or "A, B and/or C" mean "any of the following: A; B; C; A and B; A and C; B and C; A, B and C.". An exception to this definition will occur only when a combination of elements, functions, steps, or acts are in some way inherently mutually exclusive.

Aspects of the present disclosure are described below with reference to schematic flowchart diagrams and/ or schematic block diagrams of methods, apparatuses, systems, and computer program products according to embodiments of the disclosure. It will be understood that each block of the schematic flowchart diagrams and/or schematic block diagrams, and combinations of blocks in the schematic flowchart diagrams and/or schematic block diagrams, can be implemented by computer program instructions. These computer program instructions may be provided to a processor of a computer or other programmable data processing apparatus to produce a machine, such that the instructions, which execute via the processor or other programmable data processing apparatus, create means for implementing the functions and/or acts specified in the schematic flowchart diagrams and/or schematic block diagrams block or blocks.

It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated figures. Although various arrow types and line types may be employed in the flowchart and/or block diagrams, they are understood not to limit the scope of the corresponding embodiments. For instance, an arrow may indicate a waiting or monitoring period of unspecified duration between enumerated steps of the depicted embodiment.

In the following detailed description, reference is made to the accompanying drawings, which form a part thereof. The foregoing summary is illustrative only and is not intended to be in any way limiting. In addition to the illustrative aspects, embodiments, and features described above, further aspects, embodiments, and features will become apparent by reference to the drawings and the following detailed description. The description of elements in each figure may refer to elements of proceeding figures. Like numbers may refer to like elements in the figures, including alternate embodiments of like elements.

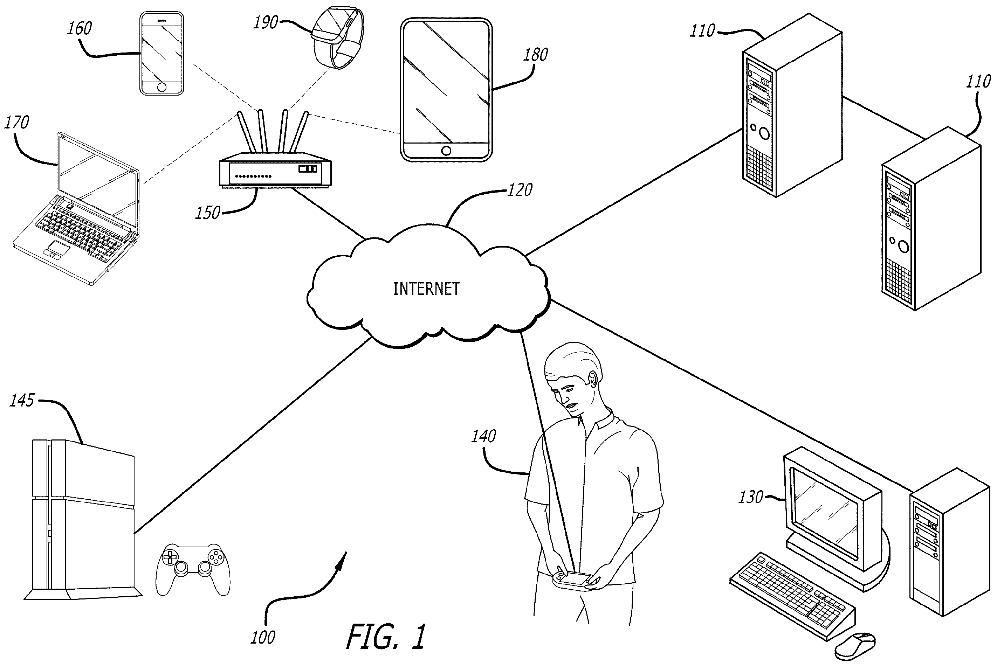

Referring to FIG. 1, a video game ecosystem 100 in accordance with various embodiments of the disclosure is shown. In many embodiments, the game can be designed to seamlessly integrate and function across various devices, including servers 110, home gaming consoles 145, mobile gaming consoles 140, laptops 170, personal computers 130, tablets 180, smartphones 160, wearable devices 190, and more. This integration can ensure a consistent and optimized gaming experience, regardless of the device being used.

In some embodiments, the game can be developed using a modular architecture, enabling compatibility and scalability across multiple platforms. The core game logic, assets, and the timeline control system may be abstracted into platform-agnostic modules. These modules can be encapsulated in a game engine designed to handle platform-specific requirements dynamically. As those skilled in the art will recognize, certain embodiments, such as games that require a client/server relationship may require one or more aspects of the game to be processed server-side in one or more of the servers 110.

In a number of embodiments, distribution of the game across the various platforms may leverage cloud-based infrastructure, enabling seamless delivery of game content to end-users. Upon release, the game can be hosted on central servers 110 equipped with, or working in conjunction with, content delivery networks (CDNs) to minimize latency and ensure quick access. Players may download the game client tailored to their specific device. For home gaming consoles and personal computers, distribution can be through established digital storefronts, such as the PlayStation Network, Xbox Live, Steam, and others. Mobile and tablet versions may be available via app stores like Google Play and Apple's App Store. Additionally, wearable devices and newer platforms can access the game through dedicated portals or companion apps.

In various embodiments, upon installation, the game may communicate with central servers 110 to authenticate users, sync progress, and manage in-game assets. In some embodiments, for instance, on higher-performance home gaming consoles 145 and PCs 130, the game may provide high-resolution, dynamic range views with advanced effects like depth of field and motion blur. On mobile devices and tablets, the timeline control system can optimize for performance, ensuring smooth gameplay while maintaining visual fidelity.

Certain embodiments of the ecosystem 100 may allow for cross-platform play, allowing users to interact and play together regardless of the device they are using. This architecture can support this by maintaining a unified player database and real-time synchronization of game states. In various embodiments, the timeline control system can adjust its parameters, scores, or views based on the device in use or the current state of other players within the online game, ensuring a consistent gameplay experience.

In more embodiments, updates can be distributed through the same channels as the original game, ensuring that all devices receive the latest features, bug fixes, and improvements simultaneously. The timeline control system and any associated logic, being a part of the gameplay experience, may also receive regular updates and telemetry data to enhance functionality and performance based on user feedback and advancements in technology.

In additional embodiments, the ecosystem 100 can include one or more servers 110 that can play a role in ensuring smooth operation, synchronization, and management of the game across various devices. The server 110 can be configured to handle various operations such as, but not limited to, user authentication, ensuring that only legitimate users can access the game. This process may involve verifying login credentials and managing user sessions. Additionally, the server 110 can manage authorization, determining what resources and features each user is permitted to access based on their account type and progress within the game.

In further embodiments, the server 110 can maintain the game's overall state, ensuring consistency and synchronization across all connected devices. This may involve tracking player progress, in-game events, and real-time interactions. For multiplayer scenarios, the server 110 can ensure that all players experience the same game state, coordinating actions and updates to maintain a seamless multiplayer experience.

In still more embodiments, servers 110 can be responsible for delivering game content, including initial game files, updates, patches, and downloadable content (DLC). They may utilize content delivery networks (CDNs) to distribute these files efficiently, reducing latency and ensuring that players can quickly access and download necessary game data. In multiplayer games, the server 110 can manage matchmaking, pairing players based on their skill levels, preferences, and other criteria. Once matched, the server 110 may establish and manage game sessions, ensuring that players are connected to the appropriate game instances and maintaining the integrity of these sessions.

The server 110 may also be configured to store and manages all necessary game data, including user profiles, game progress, leaderboards, and in-game statistics. This data can be stored in secure databases and accessed and updated as needed to reflect players' actions and achievements within the game. To maintain a fair gaming environment, various embodiments of the server 110 can implement security measures and anti-cheat systems. These measures can be configured to detect and prevent unauthorized modifications, hacks, or exploits that could disrupt the game's balance or give certain players unfair advantages.

Servers 110 can also collect and analyze data related to game performance, user behavior, and system health. This information may be used to monitor the game's performance, identify and address issues, and inform future updates and improvements. Analytics can also help in understanding player engagement and preferences, guiding the development of new features and content. In yet additional embodiments, the server 110 can facilitate social features, such as friend lists, messaging, and in-game communities. It can sometimes manage interactions between players, supports communication channels, and ensures that social features are integrated seamlessly into the gaming experience. To handle varying numbers of concurrent players, the server 110 can be designed to have a scalable infrastructure. This may include utilizing load balancing techniques to distribute the workload evenly across multiple servers, ensuring consistent performance and preventing any single server from becoming a bottleneck.

In many embodiments, the ecosystem 100 may utilize the internet 120 and wireless network devices like routers 150 to efficiently deliver data across various devices, ensuring seamless connectivity and gameplay. For wireless devices, such as mobile gaming consoles 140, tablets 180, and wearable devices 190, the router 150 can provide Wi-Fi connectivity. Modern routers support high-speed wireless standards like Wi-Fi 6, which offer faster data rates, lower latency, and improved handling of multiple devices simultaneously. This can ensure a stable and efficient connection for gaming, even in households with numerous connected devices.

As the game operates, data packets are transmitted between the player's device and the servers 110. These packets may include user inputs, game state updates, and synchronization data. The router 150 can handle the routing of these packets, directing them to their destination through the internet. Advanced Quality of Service (QoS) settings on routers can prioritize gaming traffic to ensure minimal latency and reduced lag, enhancing the gaming experience. During multiplayer sessions, the router 150 can play a role in maintaining a stable connection. It manages data traffic between multiple players, ensuring that game state updates and player interactions are synchronized in real-time. The ecosystem 100 can also be configured to utilize peer-to-peer (P2P) networking in conjunction with traditional client-server models. In P2P setups, game data may be shared directly between players' devices, reducing the load on central servers and improving data transfer speeds. The router 150 can, in certain embodiments, facilitate these direct connections, ensuring that data packets are correctly routed between peers.

In a number of embodiments, a PC 130 can download the game/game client from a digital storefront from one or more servers 110. Once installed, the game client can connect to the game's servers 110 via the internet 120, authenticating the user and syncing their game data. In certain embodiments, the PC 130 can also interact with other devices in the ecosystem 100. For example, a player might use a mobile app on their tablet 180 or smartphone 160 to manage their game inventory or chat with friends while playing on their PC 130. These interactions can be facilitated by one or more servers 110, which can synchronize data across all connected devices, ensuring a unified and cohesive gaming experience.

As those skilled in the art will recognize, home gaming consoles 145 are often specifically designed for gaming, providing a consistent and optimized experience without the need for extensive configuration. In various embodiments, home gaming consoles 145 frequently include social and community features that are tightly integrated into the ecosystem 100. Players can easily add friends, join parties, and communicate through voice or text chat. Additionally, game content distribution on home gaming consoles 145 often involves digital storefronts. In additional embodiments, consoles are designed to work seamlessly with various peripherals and accessories, such as controllers, headsets, and virtual reality (VR) devices.

In further embodiments, a mobile gaming console 140 has a design emphasizing portability, featuring a compact form factor, built-in display, and rechargeable battery. This allows players to continue their gaming sessions seamlessly when moving between different locations. In various embodiments, the game client and associated game logic on the mobile gaming console is optimized to handle the specific hardware and connectivity characteristics of these devices, ensuring smooth performance and efficient battery usage.

The mobile gaming console 140 can also connect to other devices through companion apps or cloud gaming services. For example, a player might use a mobile app on their console 140 to manage in-game items or communicate with friends, synchronizing this data with their main game profile on the servers 110. In certain embodiments, cloud gaming services can allow the mobile gaming console 140 to stream games from powerful servers 110, bypassing the need for high-end local hardware and ensuring access to graphically intensive games that would otherwise be beyond the device's capabilities.

Furthermore, mobile gaming consoles 140 can often support local multiplayer gaming through ad-hoc networks or Bluetooth connections. This may allow players to connect directly with other nearby mobile gaming consoles 140 for shared gaming experiences without relying solely on the internet. The servers 110 can then sync any local multiplayer progress with the broader ecosystem 100 once the devices reconnect to the internet 120.

Unlike stationary PCs 130, laptops 170, can be used in various environments, from home to public spaces. Many gaming laptops 170 come with dedicated GPUs, allowing for high-quality graphics and smooth gameplay. Laptops 170 may also support various peripheral connections, including external displays, gaming controllers, and VR headsets, expanding their gaming capabilities.

In more embodiments, smartphones 160 can offer unique features like GPS, accelerometers, gyroscopes, and cameras, which can be integrated into gameplay to provide augmented reality (AR) experiences and location-based gaming. Touchscreens are often standard on smartphones 160, facilitating intuitive controls and gestures. The ubiquity of smartphones 160 can ensure that players can engage with the game ecosystem wherever they are, and mobile-specific features like notifications keep players connected to in-game events and updates. Additionally, smartphones 160 may often include biometric security features such as fingerprint scanners and facial recognition, enhancing secure access to game accounts and in-game purchases.

In numerous embodiments, wearable devices 190, such as, but not limited to, smartwatches and AR glasses, can add a layer of interaction that extends beyond traditional gaming platforms. These devices can provide real-time notifications, health tracking, and context-sensitive interactions based on the player's environment. For example, a smartwatch might track physical activity during a fitness game, providing feedback and integrating physical activity into the gaming experience. In another example, AR glasses can overlay game elements onto the real world, creating immersive and interactive experiences that blend reality with the virtual game environment. Wearable devices 190 may also enable continuous engagement with the ecosystem 100 through haptic feedback and voice commands, allowing players to interact without needing to look at a screen.

In still more embodiments, tablets 180 can offer a larger screen size than smartphones while maintaining portability, making them ideal for immersive gameplay on the go. Tablets 180 may be configured to support both touch and stylus input, providing precise control options for games that require fine-tuned interactions. They may also be excellent for split-screen or multi-window functionality, enabling players to run multiple apps simultaneously, such as a game and a companion app. Tablets 180 can easily connect to external peripherals like keyboards and game controllers, bridging the gap between mobile and traditional gaming setups.

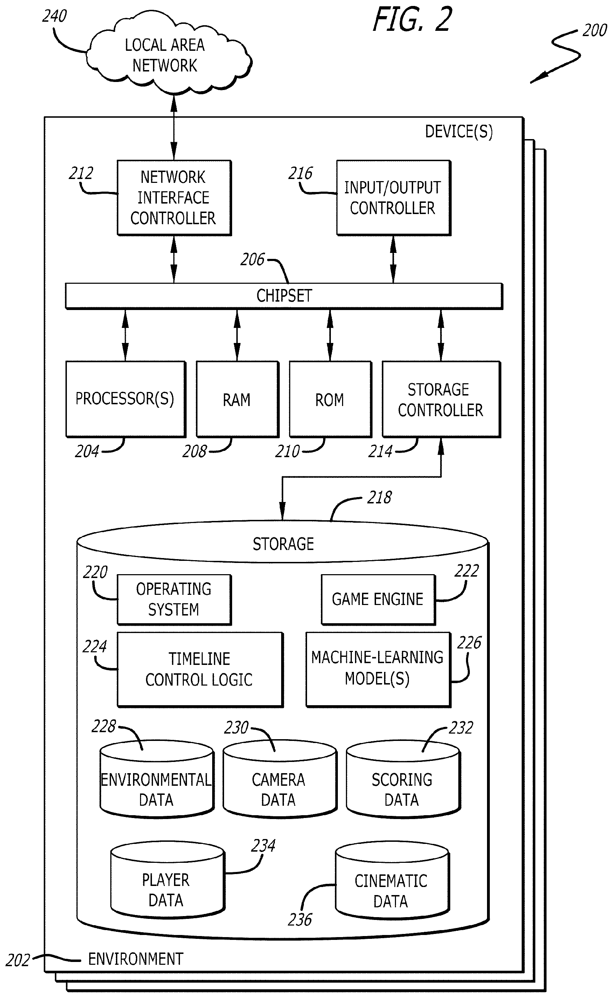

Although a specific embodiment for a video game ecosystem 100 is described above with respect to FIG. 1, any of a variety of systems and/or processes may be utilized in accordance with embodiments of the disclosure. For example, the video game ecosystem 100 may be configured into any number of various network topologies including different types of interconnected devices and user devices. The elements depicted in FIG. 1 may also be interchangeable with other elements of FIGS. 2-12 as required to realize a particularly desired embodiment.

Referring to FIG. 2, a conceptual block diagram of a device 200 suitable for configuration with a timeline control logic 224, in accordance with various embodiments of the disclosure is shown. The embodiment of the conceptual block diagram depicted in FIG. 2 can illustrate a conventional game device, personal computer, mobile game device, game server, laptop, tablet, network appliance, e-reader, smartphone, wearable device, or other computing device, and can be utilized to execute any of the application and/or logic components presented herein. The device 200 may, in many non-limiting examples, correspond to physical devices or to virtual resources described herein.

In many embodiments, the device 200 may include an environment 202 such as a baseboard or "motherboard," in physical embodiments that can be configured as a printed circuit board with a multitude of components or devices connected by way of a system bus or other electrical communication paths. Conceptually, in virtualized embodiments, the environment 202 may be a virtual environment that encompasses and executes the remaining components and resources of the device 200. In more embodiments, one or more processors 204, such as, but not limited to, central processing units ("CPUs") can be configured to operate in conjunction with a chipset 206. The processor(s) 204 can be standard programmable CPUs that perform arithmetic and logical operations necessary for the operation of the device 200.

In a number of embodiments, the processor(s) 204 can perform one or more operations by transitioning from one discrete, physical state to the next through the manipulation of switching elements that differentiate between and change these states. Switching elements generally include electronic circuits that maintain one of two binary states, such as flip-flops, and electronic circuits that provide an output state based on the logical combination of the states of one or more other switching elements, such as logic gates. These basic switching elements can be combined to create more complex logic circuits, including registers, adders-subtractors, arithmetic logic units, floating-point units, and the like.

In various embodiments, the chipset 206 may provide an interface between the processor(s) 204 and the remainder of the components and devices within the environment 202. The device 200 can incorporate different types of processors to enhance performance and efficiency across various tasks. A central processing unit (CPU) can handle primary processing tasks such as game logic, AI, and player inputs, while a graphics processing unit (GPU) can be specialized for rendering high-resolution graphics and visual effects. Digital signal processors (DSPs) may manage audio processing, delivering high-quality sound without burdening the CPU. In portable devices, systems on a chip (SoCs) can be configured to integrate the CPU, GPU, memory, and peripherals to balance performance and efficiency. In some embodiments, application-specific integrated circuits (ASICs) can optimize specific functions like cryptographic processing, while neural processing units (NPUs) accelerate AI and machine learning tasks. Some high-end devices may also include physics processing units (PPUs) to handle complex physics calculations, further enhancing the realism and responsiveness of the gaming experience. However, those skilled in the art will recognize that the device 200 can any variety or combination of processor(s) 204 as needed to satisfy the desired application.

The chipset 206 can provide an interface to a random-access memory ("RAM") 208, which can be used as the main memory in the device 200 in some embodiments. The chipset 206 can further be configured to provide an interface to a computer-readable storage medium such as a read-only memory ("ROM") 210 or non-volatile RAM ("NVRAM") for storing basic routines that can help with various tasks such as, but not limited to, starting up the device 200 and/or transferring information between the various components and devices. The ROM 210 or NVRAM can also store other application components necessary for the operation of the device 200 in accordance with various embodiments described herein.

Additional embodiments of the device 200 can be configured to operate in a networked environment using logical connections to remote computing devices and computer systems through a network, such as the local area network 240. The chipset 206 can include functionality for providing network connectivity through a network interface controller ("NIC") 212, which may comprise a gigabit Ethernet adapter or similar component. The NIC 212 can be capable of connecting the device 200 to other devices over the local area network 240. It is contemplated that multiple NICs 212 may be present in the device 200, connecting the device to other types of networks and remote systems, such as the Internet.

In further embodiments, the device 200 can be connected to a storage 218 that provides non-volatile storage for data accessible by the device 200. The storage 218 can, for instance, store an operating system 220, and/or game engine 222. In various embodiments, the storage 218 can be connected to the environment 202 through a storage controller 214 connected to the chipset 206. In certain embodiments, the storage 218 can consist of one or more physical storage units. The storage controller 214 can interface with the physical storage units through a serial attached SCSI ("SAS") interface, a serial advanced technology attachment ("SATA") interface, a fiber channel ("FC") interface, or other type of interface for physically connecting and transferring data between computers and physical storage units.

In additional embodiments, the device 200 can store data within the storage 218 by transforming the physical state of the physical storage units to reflect the information being stored. The specific transformation of physical state can depend on various factors. Examples of such factors can include, but are not limited to, the technology used to implement the physical storage units, whether the storage 218 is characterized as primary or secondary storage, and the like.

In many more embodiments, the device 200 can store information within the storage 218 by issuing instructions through the storage controller 214 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit, or the like. Other transformations of physical media are possible without departing from the scope and spirit of the present description, with the foregoing examples provided only to facilitate this description. In some embodiments, the device 200 can further read or access information from the storage 218 by detecting the physical states or characteristics of one or more particular locations within the physical storage units.

In addition to the storage 218 described above, certain embodiments of the device 200 may also have access to other computer-readable storage media to store and retrieve information, such as program modules, data structures, or other data. It should be appreciated by those skilled in the art that computer-readable storage media is any available media that provides for the non-transitory storage of data and that can be accessed by the device 200. In some examples, operations performed by a cloud computing network, and or any components included therein, may be supported by one or more devices similar to device 200. Stated otherwise, some or all of the operations performed by the cloud computing network, and or any components included therein, may be performed by one or more devices 200 operating in a cloud-based arrangement.

By way of example, and not limitation, computer-readable storage media can include volatile and non-volatile, removable and non-removable media implemented in any method or technology. Computer-readable storage media includes, but is not limited to, RAM, ROM, erasable programmable ROM ("EPROM"), electrically-erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage or other magnetic storage devices, or any other medium that can be used to store the desired information in a non-transitory fashion.

As mentioned briefly above, the storage 218 can store an operating system 220 utilized to control the operation of the device 200. According to one embodiment, the operating system comprises the LINUX operating system. According to another embodiment, the operating system comprises the WINDOWS^{®} SERVER operating system from MICROSOFT Corporation of Redmond, Washington. According to further embodiments, the operating system can comprise the UNIX operating system or one of its variants. It should be appreciated that other operating systems can also be utilized. The storage 218 can store other system or application programs and data utilized by the device 200.

In many additional embodiments, the storage 218 or other computer-readable storage media is encoded with computer-executable instructions which, when loaded into the device 200, may transform it from a general-purpose computing system into a special-purpose computer capable of implementing the embodiments described herein. These computer-executable instructions may be stored as application and transform the device 200 by specifying how the processor(s) 204 can transition between states, as described above. In some embodiments, the device 200 has access to computer-readable storage media storing computer-executable instructions which, when executed by the device 200, perform the various processes described above with regard to FIGS. 1 and 3-12. In certain embodiments, the device 200 can also include computer-readable storage media having instructions stored thereupon for performing any of the other computer-implemented operations described herein.

In a number of embodiments, the device 200 can store a game engine 222 in storage 218 and load it when the game is launched, enabling quick access and execution. The game engine 222 can manage core tasks such as rendering graphics, processing inputs, handling physics calculations, and managing audio by leveraging the device's CPU, GPU, and other hardware components. It can abstract hardware complexities to ensure smooth gameplay and real-time interaction. Additionally, in various embodiments, the game engine 222 cam facilitate network communications for multiplayer interactions and supports cross-platform functionality, allowing games to run efficiently on various devices within the available game ecosystem.

In many further embodiments, the device 200 may include a full control timeline control logic 224. The timeline control logic 224 can be configured to perform one or more of the various steps, processes, operations, and/or other methods that are described above. Often, the timeline control logic 224 can be a set of instructions stored within a non-volatile memory that, when executed by the processor(s)/controller(s) 204 can carry out these steps, etc. In some embodiments, the timeline control logic 224 may be a client application that resides on a network-connected device, such as, but not limited to, a server, switch, personal or mobile computing device in a single or distributed arrangement.

In some embodiments, pinch point data 228 can serve as an element within an interactive game system, enabling the game to manage and present key narrative moments that all players encounter, such as cutscenes or pivotal story events. This data can be processed to create a more dynamic and tailored experience for each player. For example, timeline data associated with a pinch point may denote precisely where the event occurs within the overall game structure, allowing the system to track a player's progress and ensure that they experience essential story elements in the correct sequence. Keyframe data linked to the pinch point provides information about the animation frames that are triggered during these moments, ensuring smooth and accurate playback of visual elements that are critical to the narrative. Additionally, prompt data can be used to determine how and when to prompt the player about their choices concerning the timeline feature, such as verifying if they wish to revisit or skip ahead through specific pinch points. This can allow for seamless integration of player agency while ensuring they do not miss vital aspects of the story. Display data, on the other hand, may dictate how these narrative elements should be presented, such as positioning, scaling, or layering of visual components during a pinch point, to enhance immersion and storytelling.

In more embodiments, event data 230 can play a role in enriching the interactive experience during pinch points by providing detailed information about the events that unfold within these critical narrative moments. One aspect of event data 230 is story moment data, which can mark specific plot points that are essential for understanding the game's overall story. These story moments serve as anchor points that guide the player through the narrative, ensuring they grasp the key themes, character motivations, and story developments. By tracking and processing story moment data, the game can highlight these pivotal events within a pinch point, allowing players to experience the storyline in a coherent and engaging manner, regardless of their skill level or progression path. In addition to story moment data, event data 230 may also encompass injection moment data, which refers to instances where ads, announcements, or other materials can be injected into the game at certain points, often dynamically or based on real-world events. This type of data may enable the game to adapt to external influences, such as promoting in-game events, sales, or even delivering real-time updates that enhance the sense of immersion. Finally, focus moment data can form a critical component of event data by identifying segments within a pinch point that require the player's attention to fully comprehend the narrative, such as crucial dialogues, visual cues, or interactions with the environment.

In various embodiments, cutscene data 232 is utilized to manage how narrative-driven moments are presented to players, ensuring that these sequences are both engaging and seamlessly integrated into the gameplay experience. One key aspect of this data is cutscene timing data, which controls the precise timing and sequencing of cutscenes, dictating when they begin, how long they last, and how they transition into and out of gameplay. This ensures that the storytelling flows naturally, maintaining the player's immersion while advancing the plot at appropriate moments. Keyframe data further enriches the cutscene by directing the exact frames of animation, enabling smooth and visually appealing transitions between movements, expressions, and camera angles within the cutscene, thereby enhancing the storytelling quality. Another aspect is cosmetic variable data, which accounts for changes made by the player to their avatar or other in-game assets. This data can ensure that any customizations, such as altered outfits or weapon skins, can be accurately reflected within the cutscene, creating a more personalized and cohesive experience. Scrubbing location data may identify optimal points within the cutscene where playback can be paused or resumed when players are scrubbing through the timeline, ensuring that the cutscene can be restarted smoothly without disrupting the flow of the narrative. Lastly, game engine handling data provides instructions to the game engine on how to manage the playback and restart of assets and animations within a cutscene, allowing for dynamic adjustment of elements such as lighting, physics, or character positioning. This ensures that cutscenes are rendered accurately and consistently, regardless of where they are paused or resumed, preserving the integrity of the storytelling and the overall game experience.

In various embodiments, player data 234 can serve as a valuable resource in personalizing the gaming experience, allowing the game to adapt to the individual needs, preferences, and progression of each player. One aspect of this is progression history data, which can track how far the player has advanced through the game and what content they have already experienced. This information can be utilized when presenting a timeline, as it helps determine whether certain story elements or potential spoilers should be revealed. For example, if a player has only reached a certain point in the game, the system can prevent them from accidentally jumping ahead to key story moments they have not yet encountered, unless a prompt is approved by the player. Furthermore, this historical data can guide when a timeline option should be offered, as well as which specific points are suitable for scrubbing, ensuring the player remains engaged without compromising the intended narrative flow. Player type data can be another component that helps tailor the timeline experience based on the player's preferred style of gameplay. This data might indicate whether the player is aiming for a completionist playthrough, a speedrun, or simply wants to focus on the narrative, allowing the game to adjust the timeline's features and functionality accordingly. For instance, a player interested in experiencing the story might benefit from a timeline that highlights narrative pinch points, while a speed runner may prefer a timeline that allows for quick navigation to allowed or sanctioned gameplay segments without unduly or accidentally skipping necessary parts. Additionally, player preferences data can capture information about the desired difficulty level and timeline behavior, enabling the system to adjust elements such as challenge levels, cutscene pacing, or how much control the player has over timeline navigation.

In still more embodiments, game scene data 236 can play a crucial role in managing the various elements that make up both cutscenes and gameplay scenes within an interactive game, ensuring a cohesive and engaging experience. One component of this data can be scene timing data, which orchestrates the timing of different events and actions, dictating how they interrelate within the game world. This can ensure that events occur in a logical sequence, whether during a fast-paced combat scenario or a narrative-driven cutscene, allowing for a seamless transition between gameplay and story moments. Asset data, on the other hand, defines all the individual assets, such as characters, props, environmental elements, and visual effects, that are required for each scene. By managing asset data effectively, the game can ensure that every element is present and accounted for, contributing to a rich and immersive experience. Staging data can further refine this process by providing detailed instructions on the placement and arrangement of these assets within a specific gameplay area or cutscene. This may allow the game to set up scenes with precise positioning, ensuring that characters, objects, and environmental details are accurately situated to create a visually appealing and coherent world. Loading data can also play a significant role by managing how and when different assets are loaded into the scene, optimizing performance and minimizing loading times to maintain the flow of the game. Finally, scoring data can track how various events, actions, or items are scored throughout gameplay, ensuring that players are appropriately rewarded for their actions, even when they choose to navigate through the timeline to skip or revisit certain scenes.

In still further embodiments, the device 200 can also include one or more input/output controllers 216 for receiving and processing input from a number of input devices, such as a keyboard, a mouse, a touchpad, a touch screen, an electronic stylus, or other type of input device. Similarly, an input/output controller 216 can be configured to provide output to a display, such as a computer monitor, a flat panel display, a digital projector, a printer, or other type of output device. Those skilled in the art will recognize that the device 200 might not include all of the components shown in FIG. 2 and can include other components that are not explicitly shown in FIG. 2 or might utilize an architecture completely different than that shown in FIG. 2.

As described above, the device 200 may support a virtualization layer, such as one or more virtual resources executing on the device 200. In some examples, the virtualization layer may be supported by a hypervisor that provides one or more virtual machines running on the device 200 to perform functions described herein. The virtualization layer may generally support a virtual resource that performs at least a portion of the techniques described herein.

Finally, in numerous additional embodiments, data may be processed into a format usable by one or more machine-learning models 226 (e.g., feature vectors), and or other pre-processing techniques. The machine-learning ("ML") models 226 may be any type of ML model, such as supervised models, reinforcement models, and/or unsupervised models. The ML models 226 may include one or more of linear regression models, logistic regression models, decision trees, Naive Bayes models, neural networks, k-means cluster models, random forest models, and/or other types of ML models 226.

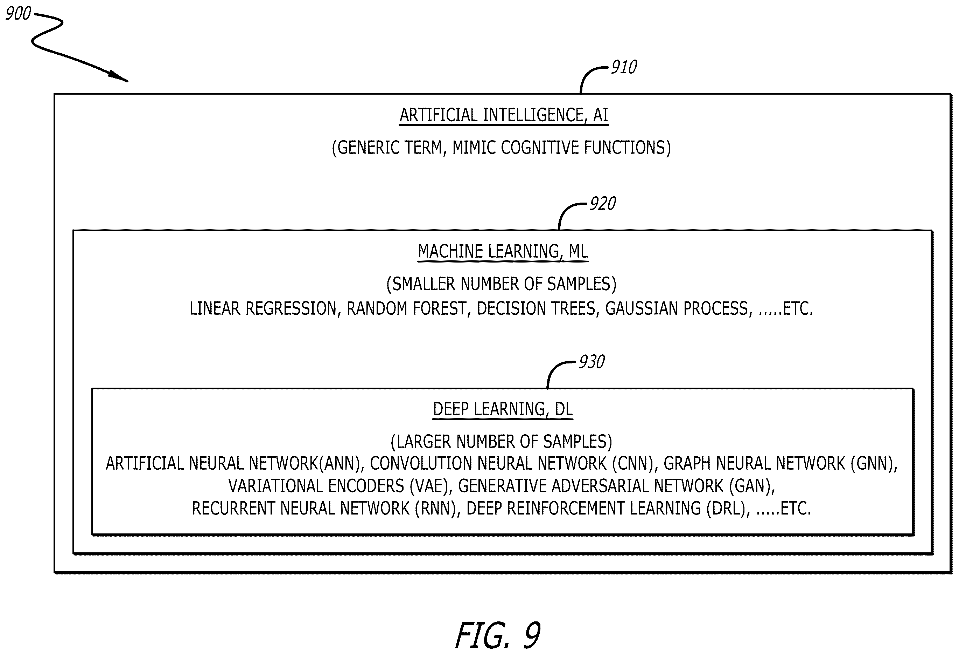

The ML model(s) 226 can be configured to generate inferences to make predictions or draw conclusions from data. An inference can be considered the output of a process of applying a model to new data. This can occur by learning from at least the pinch point data 228, event data 230, cutscene data 232, player data 234, and/or game scene data 236. These predictions can be based on patterns and relationships discovered within the data. To generate an inference, the trained model can take input data and produce a prediction or a decision. The input data can be in various forms, such as images, audio, text, or numerical data, depending on the type of problem the model was trained to solve. The output of the model can also vary depending on the problem, and can be a single number, a set of coordinates within a three-dimensional space, a probability distribution, a set of labels/characteristics/parameters, a decision about an action to take, etc. Ground truth for the ML model(s) 226 may be generated by human/administrator verifications or may compare predicted outcomes with actual outcomes. Further embodiments of AI and ML-based solutions are within the discussion of FIGS. 9-12.

Although a specific embodiment for a conceptual block diagram of a device suitable for configuration with a timeline control logic suitable for carrying out the various steps, processes, methods, and operations described herein is discussed with respect to FIG. 2, any of a variety of systems and/or processes may be utilized in accordance with embodiments of the disclosure. For example, the device 200 may be in a virtual environment such as a cloud-based game administration environment, or it may be distributed across a variety of network devices or servers. The elements depicted in FIG. 2 may also be interchangeable with other elements of FIGS. 1 and 3-12 as required to realize a particularly desired embodiment.

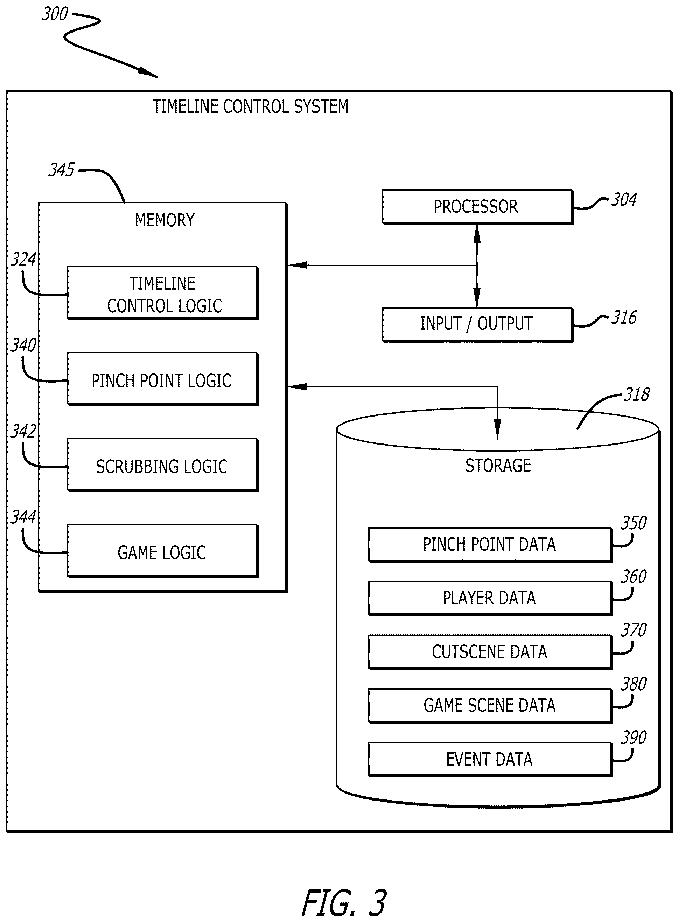

Referring to FIG. 3, an abstract block diagram of the components of a timeline control game system 300 in accordance with various embodiments of the disclosure is shown. In many embodiments, the timeline control game system 300 can be configured to include at least one or more processors 304, input/output functionality 316, a storage 318 as well as a memory 345 configured for executing one or more various logics. Specifically in the embodiment depicted in FIG. 3, the memory 345 comprises a timeline control logic 324 as well as a pinch point logic 340, scrubbing logic 342, and a game logic 344. Similarly, the storage 318 may comprise pinch point data 350, player data 360, cutscene data 370, game scene data 380, and event data 390.

In some embodiments, the timeline control logic 324 can facilitate the use of a timeline system within a video game. In certain embodiments, the timeline control logic 324 can work in conjunction with various other logics, such as a pinch point logic 340, scrubbing logic 342 and game logic 344. These logics may be configured as separate logics or may be interconnected or packaged/executed as a single logic.

In many embodiments, a pinch point logic 340 within the timeline system serves as a crucial mechanism that ensures players encounter and experience essential narrative and gameplay moments, even when they use the timeline to navigate forward or backward through the game. In certain embodiments, this logic can be designed to recognize key convergence points where all players typically pass through regardless of their chosen path and manage how the game transitions in and out of these moments to maintain the integrity of the story and gameplay. In some embodiments, when a player attempts to scrub past a pinch point, the pinch point logic 340 may prompt them with a notification, allowing them to either engage with the event or be reminded of its significance in the overall narrative. This can ensure that even if players choose to skip over certain sections, they are still made aware of critical story developments, plot twists, or important gameplay tutorials that are necessary for understanding the game. Additionally, the pinch point logic 340 can dynamically adjust how cutscenes, dialogue, and other narrative elements are presented, ensuring that these elements are reintroduced or highlighted whenever a player revisits or jumps to these points on the timeline. This can prevent inconsistencies, missed story elements, or disjointed gameplay experiences, ensuring that the narrative remains cohesive and that pivotal moments are experienced as intended.

In a number of embodiments scrubbing logic 342 within a timeline system can play a role in managing how the game responds when a player moves forward or backward through the timeline, ensuring a smooth, consistent, and immersive experience. This logic can be responsible for determining how various elements of the game, such as animations, events, dialogues, and asset loading, are handled as the player scrubs to different points within the game's narrative or gameplay segments. For example, when a player drags the timeline marker to a new position, the scrubbing logic 342 may identify the specific moment the player wants to access and seamlessly adjusts the game state to match that point. In some embodiments, this can involve resetting character positions, enemy states, environmental interactions, and any ongoing effects or animations to reflect the exact conditions that should be present at that moment in the game. Additionally, scrubbing logic 342 can ensure that complex sequences, such as cutscenes or boss fights, can be paused, resumed, or replayed without breaking the flow of the action, by correctly managing the underlying game engine processes, like physics calculations, audio synchronization, and event triggers. It can also apply checkpoints or buffer points to ensure that the most relevant data is quickly accessible, optimizing performance and preventing lag or delays during scrubbing.

In yet more embodiments, game logic 344 within the timeline system can serve as the core set of rules and processes that govern how the interactive game responds to player actions when they navigate through the timeline, ensuring that the game maintains consistency, functionality, and narrative coherence. This logic can be responsible for overseeing the state of gameplay elements, such as character health, inventory items, enemy behavior, and completed objectives, whenever a player scrubs forward or backward through the timeline. For instance, if a player chooses to revisit an earlier point in the game, the game logic 344 can be configured such that all relevant game states, such as quest progress, unlocked abilities, and environmental changes, are accurately reverted to match the conditions of that specific moment.

Conversely, if the player skips ahead, the game logic may appropriately update these states, applying any necessary adjustments to reflect what should be true at that advanced point in the narrative, such as setting completed quests as finished, adjusting character dialogues, or ensuring that previously defeated enemies remain inactive. Additionally, game logic 344 can interact with other systems, such as pinch point logic 340 and scrubbing logic 342, to manage how story events, challenges, and cutscenes are triggered or bypassed, ensuring that key narrative moments are experienced even if the player moves through the timeline non-linearly.

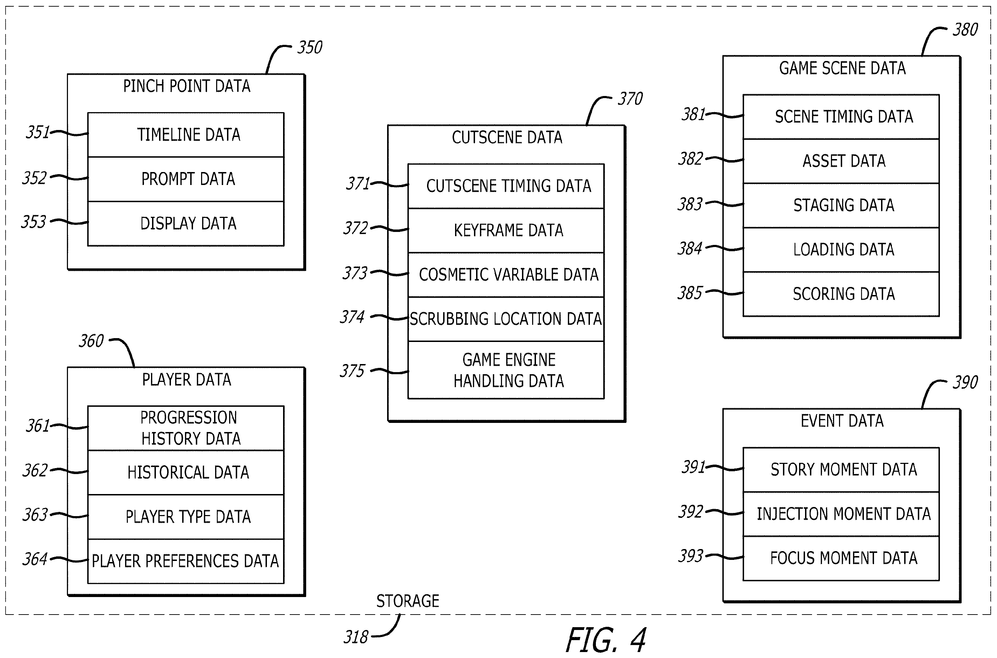

As discussed above in the embodiment depicted in FIG. 2, and in more detail below in the embodiment depicted in FIG. 4, the timeline control game system 300 may include a number of different types of available data to work with. These data may include pinch point data 350 that can capture various aspects of the gameplay flow being generated and utilized. There may also be player data 360 that can describe different attributes of the player and their current avatar and/or preferences. Cutscene data 370 can be configured to provide various types of information related to how a cutscene is generated and integrated within a gaming environment. Game scene data 380 can help process the various openended gameplay scenes between cutscenes. Finally, event data 390 can provide any specific indication or related data that can better facilitate operation of a timeline within in a timeline control game system 300.

Although a specific embodiment for an abstract block diagram of the components of a timeline control system 300 suitable for carrying out the various steps, processes, methods, and operations described herein is discussed with respect to FIG. 3, any of a variety of systems and/or processes may be utilized in accordance with embodiments of the disclosure. For example, the memory 345 can be an active memory that has the logics loaded/configured and is currently executing the various steps, processes, and/or methods described herein. In some embodiments, the memory 345 may be in a virtual environment such as a cloud-based game administration environment, or it may be distributed across a variety of network devices or servers. The elements depicted in FIG. 3 may also be interchangeable with other elements of FIGS. 1-2 and 4-12 as required to realize a particularly desired embodiment.

Referring to FIG. 4, an abstract block diagram of the data within a storage 318 of a timeline control game system in accordance with various embodiments of the disclosure is shown. In many embodiments, pinch point data 350 may comprise various sub-types of data like point of timeline data 351, prompt dimension data 352, and/or display data 353. However, as those skilled in the art will recognize, many other types of data may be included as well depending on the specific game and/or application.

In a number of embodiments, timeline data 351 can play a role in managing how players navigate through key narrative and gameplay moments within an interactive game. This data may provide detailed information on where each pinch point is located within the overall game timeline, effectively mapping out the structure of the game's narrative and ensuring that players can access crucial story elements in an organized manner. By referencing this timeline data 351, the system can allow players to move forward or backward through different sections of the game, offering flexibility in how they experience the story. The timeline data 351 can also be used to synchronize with other elements, such as cutscenes, gameplay sequences, and injected content, ensuring that each pinch point aligns correctly with the intended pacing and flow of the narrative. Additionally, this data can work in conjunction with other elements like keyframe data 372, ensuring that transitions between different points on the timeline are smooth and visually cohesive.

In some embodiments, prompt data 352 can be an aspect of the interactive game experience, particularly when it comes to managing player interactions with pinch points and the overall timeline system. This data can define the specific prompts that players encounter, guiding them through key decision-making moments, such as whether they wish to advance past a challenging section, revisit a previous narrative point, or explore an alternate story path. By providing clear and context-sensitive prompts, the game ensures that players are fully aware of their choices, helping them navigate the timeline without confusion or frustration. For instance, prompt data 352 may be used to present confirmation messages when a player attempts to skip ahead, ensuring they understand the potential consequences of missing out on certain story elements. It can also facilitate engagement by offering hints, tutorials, or explanations at critical moments, aiding players who may be struggling with specific gameplay mechanics or narrative elements. Furthermore, prompt data can be tailored based on the player's progression history or preferences, delivering personalized prompts that cater to their play style, such as suggesting easier pathways for less experienced players or highlighting hidden content for those who prefer a more exploratory experience.

In additional embodiments, display data 353 can play a vital role in controlling how narrative elements, gameplay information, and interactive options are presented to the player, particularly during pinch points or when interacting with a timeline feature. This data determines the visual arrangement, styling, and presentation of content, ensuring that key elements such as cutscenes, dialogue boxes, prompts, or timelines are displayed in a manner that is both aesthetically pleasing and easy to understand. For example, display data can specify the layout of the timeline interface, including the positioning of markers, keyframe previews, and labels, allowing players to clearly see their progress and the available story branches. In certain embodiments, display data 353 may also dictate how crucial story elements are shown or emphasized, such as by using animations, color changes, or highlights to draw the player's attention to important dialogue choices or pivotal scenes. In additional embodiments, the display data 353 can indicate if certain elements should even be shown on the timeline in order to not give away accidental spoiler information to the story elements. This adaptability can enhance the overall player experience by providing a seamless and immersive interface, regardless of how the game is accessed. Furthermore, display data 353 can be used to adjust the presentation of dynamic elements, such as reflecting cosmetic changes to a player's avatar within cutscenes or adjusting the visual representation of injected content, like advertisements or special events, to maintain visual coherence with the game's narrative style.

In still more embodiments, player data 360 can include progression history data 361, historical data 362, player type data 363, and/or player preferences data 364. Player data 360 may be formatted as a list of attributes or parameters. In some embodiments, the player data 360 be a structure with a set of values that can be interpreted by other logic to implement one or more actions.

In yet further embodiments, progression history data 361 can encompass a detailed record of a player's journey and achievements within the game, capturing a wide array of information about how far they have progressed, which challenges they have overcome, and which story elements they have experienced. This data may include specifics such as the levels or missions completed, the choices made during pivotal narrative moments, the items or skills acquired, and any optional content, such as side quests or collectibles, that the player has engaged with. By maintaining this comprehensive history, the game can use progression history data 361 to create a personalized experience that adapts to the player's past actions. For instance, when utilizing a timeline feature, the game can refer to this data to determine which points in the story are accessible, ensuring that players do not unintentionally skip over important narrative segments or encounter spoilers. It also allows the system to provide recommendations or hints that are tailored to the player's journey, such as suggesting relevant cutscenes or story branches they may want to revisit. Additionally, progression history data 361 can influence in-game events, dialogues, or cutscenes, creating a more immersive experience by reflecting the player's past decisions in the ongoing narrative. It may also be used to adjust the difficulty of future challenges, offering a more balanced experience that accounts for the player's demonstrated skill level or familiarity with the game mechanics.

In still additional embodiments, historical data 362 can refer to the cumulative record of a player's interactions, behaviors, and experiences across their entire time engaging with the game, often encompassing multiple playthroughs or sessions. This data might include a broad spectrum of information, such as the total time spent playing, the frequency and duration of game sessions, the choices made during key decision points, the paths taken through different levels or story arcs, the in-game achievements unlocked, and even specific gameplay styles or strategies frequently employed by the player. By capturing this data, the game engine can gain valuable insights into the player's habits, preferences, and progression patterns over time. One potential use of historical data 362 is to inform how the game presents the timeline feature, allowing it to suggest appropriate points to revisit or skip, based on the player's previous interactions. For example, if the player often engages in a completionist style, the game might highlight areas they have not yet fully explored, while a player who prefers a more narrative-driven experience may be prompted to revisit key story moments. Historical data 362 can also be utilized to dynamically adjust the difficulty or narrative complexity, tailoring the experience to align with the player's demonstrated skill level or familiarity with certain mechanics. Additionally, this data can serve as a foundation for adaptive storytelling, where future in-game events or dialogues may change in response to the player's accumulated experiences, ensuring that each playthrough feels unique and reflective of their past choices.

In more embodiments, player type data 363 can refer to information that categorizes players based on their preferred play styles, goals, and approaches to interacting with the game, helping to create a more tailored and engaging gaming experience. This data might include details such as whether a player tends to be a completionist who aims to explore every corner of the game and collect all items, a speed runner who focuses on finishing the game as quickly as possible, or a narrative-driven player who is most interested in experiencing the story without necessarily engaging in every gameplay challenge. It may also track whether the player prefers a more strategic and methodical approach to problem-solving, enjoys action-oriented and fast-paced segments, or seeks out social interactions and cooperative gameplay elements if the game has multiplayer features.

By collecting and analyzing player type data 363, the game can adapt its timeline functionality, difficulty settings, and narrative delivery to better suit the individual player's preferences. For example, a player who enjoys uncovering every story detail might be presented with a more detailed timeline that includes optional narrative branches or hidden plot points, while a speed runner might be offered shortcuts or more efficient paths to navigate through the game's timeline. Additionally, this data can be used to adjust in-game tutorials, tips, and prompts, ensuring that players receive the guidance and support that align with their chosen style. For players who enjoy challenges, the game might increase the difficulty or highlight competitive aspects, whereas a more story-focused player might receive an experience that emphasizes narrative elements over combat or puzzle-solving.

In yet further embodiments, player preferences data 364 can encompass a range of personalized settings and options that reflect how a player chooses to experience and interact with the game, covering aspects such as audio and video configurations, difficulty levels, assistance modes, and various accessibility features. This data may include the player's selected audio settings, such as overall volume, balance between music, dialogue, and sound effects, as well as preferences for surround sound or stereo output. Video settings might involve the resolution, brightness, contrast, and gamma levels that the player prefers, as well as options for graphical fidelity, frame rates, and the use of visual effects like motion blur or depth of field. This data can also include choices related to difficulty modes, whether the player prefers an easy, normal, or hard experience, or more nuanced assistance settings, such as enabling hints, tutorials, or adaptive difficulty that adjusts in real-time based on the player's performance.

In various embodiments, player preference data 364 can help ensure that the game offers an experience tailored to the player's comfort level and skill. For example, a player who has set their preferences for a high difficulty level and disabled hints may be presented with fewer prompts or assistance when navigating challenging gameplay sections or displaying a timeline. Additionally, accessibility options like colorblind modes, subtitle sizes, or control customization preferences can be part of this data, allowing the game to accommodate a wider range of players, including those with specific needs in regard to accessing and handling the timeline.

In many embodiments, cutscene data 370 may include data related to the cutscenes rendered within the game environment, and have associated data such as, but not limited to, cutscene timing data 371, keyframe data 372, cosmetic variable data 373, scrubbing location data 374, and/or game engine handling data 375. In various embodiments, other factors related to the cutscenes, such as the display data 353 can reflect the ways in which the cutscene is rendered, etc.

In a number of embodiments, cutscene timing data 371 can be an element that manages the precise scheduling and synchronization of cutscenes within an interactive game, ensuring that these narrative sequences integrate seamlessly with the gameplay experience. This data can include the exact start and end times of each cutscene, as well as information on how long each segment of the cutscene should last, allowing the game to maintain a consistent flow between storytelling and interactive elements. It may also encompass timing cues that dictate when specific animations, dialogues, sound effects, or visual transitions should occur within the cutscene, ensuring that all elements are synchronized for maximum emotional impact. For instance, cutscene timing data can control the pacing of character movements, camera angles, and special effects to align with key story beats or dialogue delivery, creating a more cinematic and engaging experience. Furthermore, this data can interact with gameplay events, triggering cutscenes only after certain player actions, objectives, or achievements have been completed, thus ensuring that the story unfolds in a way that feels natural and responsive to the player's progression. Additionally, cutscene timing data 371 may include contingencies for pausing, skipping, or resuming cutscenes, allowing the game to adapt if a player decides to scrub through the timeline or revisit specific moments. This adaptability ensures that cutscenes can be replayed or interrupted without disrupting the narrative flow, preserving the integrity of the storytelling experience while accommodating the player's level of engagement.

In more embodiments, keyframe data 372 may be a component in animation and cutscene management within an interactive game, defining the specific frames at which critical changes in movement, position, or visual effects occur. This data can include detailed information about the exact points in time when characters, objects, or camera angles transition from one state to another, allowing for smooth and dynamic animations throughout both gameplay and narrative sequences. For example, keyframe data might indicate the precise moments when a character lifts an arm, changes facial expressions, or shifts their stance, ensuring that these actions appear fluid and natural. Depending on the context, timeline control logic may determine the best points to preview in the timeline and/or when to stop and restart gameplay.

In various embodiments, the keyframe data 372 can also involve complex movements, such as environmental changes, explosions, or light transitions, where the timing and interpolation between keyframes are essential for maintaining visual consistency and realism. In cutscenes, keyframe data is particularly valuable, as it allows animators to craft cinematic sequences with accurately timed character interactions, gestures, and camera movements that align with dialogue or dramatic story moments. Additionally, based on the game engine utilized, this data can also adapt dynamically to real-time events within the game, adjusting the position or animation of characters and objects based on the player's actions or changes to the environment. For instance, if a player has customized their character's appearance, keyframe data can be adjusted to ensure that the altered elements are accurately represented in cutscenes or during gameplay.

In additional embodiments, cosmetic variable data 373 can refer to the information that tracks and manages the visual customizations made by a player to their character, equipment, or other game assets, ensuring that these changes are consistently reflected throughout gameplay, cutscenes, and within the timeline control system. This data may include details about the player's chosen outfits, hairstyles, accessories, weapon skins, or any other cosmetic modifications applied to their avatar or in-game items. In a timeline control system, cosmetic variable data can be utilized for maintaining continuity and immersion, as it ensures that whenever a player navigates forward or backward through different segments of the game, their customized appearance is accurately displayed. For example, if a player decides to change their character's outfit or armor midway through the game, the cosmetic variable data 373 can be used to update and display this change even when the player revisits earlier cutscenes or gameplay moments via the timeline. This dynamic adaptation helps preserve the sense of personalization and ownership that players have over their in-game experience, making sure that their choices are consistently visible, regardless of where they are in the story or gameplay sequence. Additionally, cosmetic variable data 373 can be used to modify environmental elements or NPC appearances if they have been influenced by the player's customization decisions, ensuring that the game world responds appropriately to the player's actions.

In further embodiments, scrubbing location data 374 can be an aspect of a timeline control system defining the specific points within cutscenes and gameplay sequences where players can pause, rewind, fast-forward, or resume their experience seamlessly. This data may include carefully chosen markers that indicate optimal stopping or restarting points, ensuring that transitions between different moments in the game feel smooth and natural, even when the player interacts with the timeline. For example, cutscenes may be densely populated with scrubbing locations, allowing players to stop and start at key narrative beats, dialogue exchanges, or animation transitions, thereby maintaining the cinematic flow and ensuring that no crucial story elements are missed. These scrubbing locations might be placed at points where the camera shifts, a character finishes speaking, or a significant plot event occurs, offering clear and logical places for players to re-engage with the content. In contrast, general gameplay scenes may feature fewer scrubbing locations, often positioned at pinch points or moments where all players converge on a particular narrative or gameplay event, such as, but not limited to, the beginning of a mission, after completing a boss fight, or before entering a new area.

In still more embodiments, game engine handling data 375 can be a component within a timeline control system, as it can govern how the game engine manages the loading, execution, and playback of various assets, animations, and interactive elements, particularly when players navigate through cutscenes or gameplay sequences using the timeline. This data may include instructions on how to handle the initialization and reinitialization of assets, such as character models, textures, lighting effects, soundtracks, and particle systems, ensuring that they are correctly rendered and synchronized when stopping or restarting cutscenes in real time or near real time.

One of the key challenges this data addresses is that certain elements within a game engine may not function properly if they are not executed in a precise order, such as scripted events, physics simulations, or AI behavior routines that rely on sequential processing. Game engine handling data 375 can either document these dependencies and execution requirements or provide predefined methods to manage exceptions, ensuring that the game can adapt when players scrub through the timeline or resume gameplay from a different point. For example, if a cutscene involves a series of complex character animations that need to play in a specific sequence, the game engine handling data can ensure that these animations are reset to the correct keyframes or states whenever a player rewinds or fast-forwards through the scene. This helps maintain the integrity of the narrative and visual presentation, preventing glitches, desynchronization, or broken interactions. Additionally, this data can manage resource loading and unloading efficiently, optimizing performance by ensuring that only the necessary assets are active at any given moment, even when the timeline is manipulated frequently.

In numerous embodiments, game scene data 380 can include various types of data that affect the operation of a general gameplay area within the interactive game. This may include, for example, scene timing data 381, asset data 382, staging data 383, loading data 384, and/or scoring data 385. However, as those skilled in the art will recognize, other types of game scene data 380 may be utilized as needed.

In a number of embodiments, scene timing data 381 within gameplay scenes can be utilized for managing the precise sequencing and duration of events, actions, and interactions, ensuring that every element of a game scene unfolds in a cohesive and engaging manner. This data may include detailed information about when specific events should occur, such as the triggering of enemy encounters, environmental changes, dialogue exchanges, or the activation of interactive objects. It may also encompass timing for in-game mechanics like puzzle-solving sequences, platform movements, or combat animations, making sure that these elements are synchronized with player actions and narrative progression. Within a timeline control system, scene timing data 381 can be utilized because it allows the game to accurately manage the flow of gameplay when players choose to scrub forward, rewind, or jump to different points in the timeline. For instance, if a player decides to revisit a particular gameplay moment, the scene timing data can ensure that all events, from character movements to audio cues, are reset or adjusted to match the chosen point, maintaining the intended pacing and continuity. This can be especially important for scenes that involve time-sensitive elements, such as timed puzzles, coordinated attacks, or events that rely on precise sequencing to function correctly.

In more embodiments, asset data 382 can refer to the comprehensive collection of information about all the visual, audio, and interactive elements that populate a game environment, ensuring that each asset is correctly rendered, positioned, and functional within the context of the scene. This data can include details about character models, environmental textures, objects, weapons, vehicles, sound effects, background music, particle effects, lighting setups, and any other assets that contribute to the scene's overall atmosphere and interactivity. Each asset's data can encompass attributes such as its 3D model, animations, collision properties, material properties, and any associated sounds or effects that bring it to life.

Within a timeline control system, asset data 382 can play a crucial role in maintaining the integrity of the gameplay experience when players choose to scrub through, pause, or revisit different moments. For instance, if a player decides to jump back to an earlier point in the game, the asset data ensures that all objects are loaded, positioned, and animated correctly, reflecting the exact state they were in at that moment, including any modifications or interactions the player had previously made. This might involve reloading destroyed objects, resetting character positions, or restoring environmental changes that occurred due to player actions. Additionally, asset data helps optimize performance by determining which assets need to be active, loaded, or unloaded at any given point on the timeline, preventing unnecessary strain on system resources.

In further embodiments, staging data 383 within gameplay scenes can refer to the detailed information that dictates the placement, arrangement, and movement of assets, characters, and environmental elements, ensuring that each component is positioned and presented correctly within the game world. This data can include instructions on where objects such as props, obstacles, interactive items, and NPCs (non-player characters) should be located, how they should be oriented, and how they should interact with each other and the environment. It may also define the pathways or zones where characters and enemies can move, the locations of triggers for events, and the spatial relationships between various elements to create an engaging and believable scene. Within a timeline control system, staging data plays a crucial role in maintaining consistency and accuracy when players choose to scrub through or revisit different moments in the game. For instance, if a player decides to rewind to an earlier point in a scene, the staging data 383 can ensure that all assets return to their original positions, states, and orientations, recreating the exact arrangement that existed at that moment. This might involve resetting characters to specific locations, reactivating objects that were moved or destroyed, or repositioning environmental elements to match the player's previous interactions. Moreover, staging data 383 can be used to adjust the scene dynamically based on player actions, such as ensuring that objects dropped by the player remain in place or that enemies return to their original patrol routes when the timeline is manipulated.

In yet further embodiments, loading data 384 can be configured to manage how and when assets, resources, and interactive elements are loaded into memory, ensuring that the game runs smoothly and efficiently, even as players navigate through different parts of the game world with a timeline. This data can include detailed instructions about which assets, such as character models, textures, animations, sound files, environmental objects, lighting effects, and particle systems need to be loaded or unloaded at specific moments within a scene. It may also manage streaming data for large or complex environments, determining which sections of a level are actively rendered based on the player's location or actions.

In a timeline control system, loading data 384 can be utilized for enabling the game to handle real-time transitions when players scrub through, pause, or jump to different points in the timeline. For example, if a player decides to revisit an earlier part of a gameplay scene, the loading data 384 can ensure that all relevant assets are preloaded into memory before the scene resumes, preventing delays, lag, or visual pop-ins that could break immersion. Additionally, this data can be optimized to load only the necessary assets required for the specific moment in the timeline, reducing the strain on system resources and ensuring smooth performance, even in graphically intensive scenes. This selective loading may be configured for maintaining a responsive and fluid experience, especially when players frequently move backward and forward through the timeline.

In more additional embodiments, scoring data 385 can encompass all the information related to how points, rewards, achievements, or other metrics are assigned to a player based on their actions, performance, and decisions throughout the game. This data can include criteria such as the number of enemies defeated, successful completion of objectives or challenges, accuracy in combat, time taken to complete a level, exploration milestones, or the collection of in-game items. It may also track bonuses for special actions, such as pulling off complex combos, discovering hidden areas, or achieving certain gameplay feats under challenging conditions.

Within a timeline control system, scoring data 385 can play an important role in ensuring that the player's achievements and progress are accurately recorded, even when they choose to scrub through, revisit, or skip ahead in the game. For instance, if a player decides to rewind to a previous point in a scene to redo a section, the scoring data ensures that any points, rewards, or penalties previously earned are adjusted accordingly, maintaining the integrity of the scoring system. This can prevent potential exploits, such as accumulating points repeatedly by replaying easy sections, ensuring that the player's overall score remains a true reflection of their skill and accomplishments. Moreover, scoring data 385 can be used to provide feedback, allowing the timeline system to highlight moments where the player excelled or struggled, which can be useful for self-improvement or for understanding how different gameplay choices impacted their overall performance.

In additional embodiments, event data 390 may comprise various data related to how events within an interactive game can influence the use and/or management of a timeline system. In some embodiments, the event data 390 may include story moment data 391, injection moment data 392, and/or focus moment data 393.

In still more embodiments, story moment data 391 can be an aspect of game design that encompasses all the key narrative beats, plot points, character interactions, and emotional arcs that drive the story forward within a gameplay experience. This data may include detailed information about pivotal moments such as significant plot twists, character introductions or departures, dialogue exchanges, decisions that impact the storyline, and events that mark the progression of the game's narrative. Each story moment can be carefully marked within the game to indicate when and where it occurs, as well as how it influences the broader narrative structure.

Within a timeline control system, story moment data 391 can play a crucial role by providing players with a clear and organized view of the narrative elements they have encountered or are about to experience. For example, if a player decides to revisit or jump ahead using the timeline feature, the story moment data ensures that they can easily identify and access these key moments, allowing them to re-experience important cutscenes, dialogue choices, or pivotal events without losing track of the overall story. This data can also help prevent narrative inconsistencies, ensuring that if a player skips ahead, they are made aware of the context or given the option to catch up on missed story moments, thereby preserving the coherence and flow of the storyline. Additionally, story moment data 391 can be used to highlight choices or actions that have had a significant impact on the plot, allowing players to understand how their decisions have shaped the narrative and encouraging them to explore different story branches or outcomes.

In yet further embodiments, injection moment data 392 can refer to the specific points within a game where external content, such as advertisements, promotional material, additional narrative elements, or real-world event updates, can be dynamically introduced into the gameplay experience. This data may include details about the timing, placement, and content of these injected elements, ensuring they integrate seamlessly into the game's flow without disrupting the player's immersion. Injection moment data 392 may encompass information about where in the game world or timeline the content should appear, the duration it should be displayed, and the context in which it is relevant, such as during a pause in action, at a transition between levels, or within a cutscene.

In a timeline control system, injection moment data 392 can be configured to maintain consistency and relevance when players interact with the timeline feature. For example, if a player rewinds to a point before an injected advertisement or special event, the system can determine whether that content should be reintroduced, modified, or skipped based on its timing or relevance at that moment. This can ensure that injected elements do not feel repetitive or out of place, allowing the game to adapt to real-time changes, such as updating ads to reflect current promotions or adjusting narrative injections to match ongoing story developments. Conversely, in some embodiments, timeline scrubbing can be modified to direct players to see the injection elements. Furthermore, injection moment data 392 can be tailored to respond to the player's preferences or behavior, ensuring that the content remains contextually appropriate and enhancing the overall gaming experience.

In numerous embodiments, focus moment data 393 can refer to the points within an interactive game wherein a player's attention is required to fully comprehend or engage with important aspects of the narrative, gameplay mechanics, or environmental details. This data may include information about key dialogue exchanges, dramatic cutscenes, pivotal story choices, essential tutorials, or intricate gameplay sequences that demand the player's focus to progress or understand the plot. For example, focus moment data 393 might highlight moments where a character reveals a crucial piece of information, a plot twist is unveiled, or a challenging combat encounter requires the player to employ a specific strategy.

Within a timeline control system, focus moment data 393 can be configured to ensure that players do not miss out on these essential moments when navigating through the game. If a player decides to rewind or fast-forward through the timeline, the system can use this data to pause or prompt the player at these focus moments, providing an opportunity to absorb the critical information or actions required for their journey. This may ensure that players remain engaged with the story, even if they skip ahead, and can help them stay aware of the significant elements that drive the narrative or gameplay forward. Additionally, focus moment data 393 can be used to enhance accessibility, allowing players who may have missed or misunderstood a key moment the chance to revisit and engage with it again, reinforcing their understanding and connection to the game's storyline or mechanics.

Although a specific embodiment for an abstract block diagram of the data within a storage of a timeline control system suitable for carrying out the various steps, processes, methods, and operations described herein is discussed with respect to FIG. 4, any of a variety of systems and/or processes may be utilized in accordance with embodiments of the disclosure. For example, the data types described herein can vary depending on the type of application deployed and/or desired. For example, each specific data type may be concatenated into one data structure or be broken up into multiple additional data structures. Those skilled in the art will recognize that data can be formatted in a variety of ways beyond the specific embodiment depicted in FIG. 4. The elements depicted in FIG. 4 may also be interchangeable with other elements of FIGS. 1-3 and 5-12 as required to realize a particularly desired embodiment.

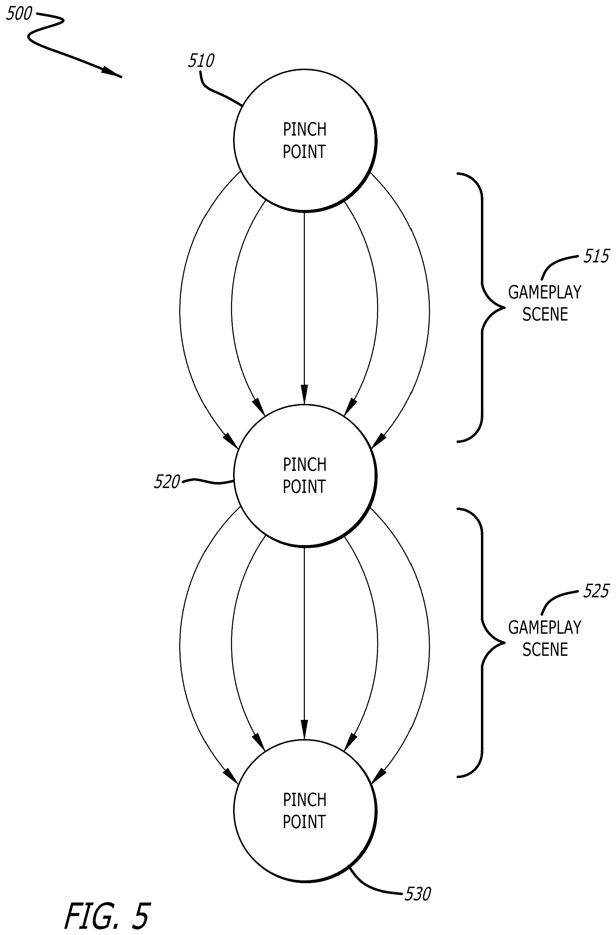

Referring to FIG. 5, a conceptual illustration of an interactive gameplay flow through a plurality of pinch points in accordance with various embodiments of the disclosure is shown. In many embodiments, pinch points can refer to critical moments or scenes that most or all players must encounter regardless of the choices or paths they have taken up to that point. Unlike general gameplay areas that offer multiple routes, side quests, or optional activities, pinch points can serve as narrative or gameplay bottlenecks where the story converges, ensuring that every player experiences the same key events, challenges, or story developments. These pinch points can be used to deliver major plot twists, boss battles, significant character interactions, or turning points in the narrative, acting as anchor points that advance the overarching storyline. By guiding all players through these moments, game designers can ensure that the essential elements of the story and gameplay mechanics are conveyed, maintaining a sense of cohesion and shared experience among the player base.

In more embodiments, pinch points can be utilized within a timeline control system, as they may provide natural stopping or restart points when players scrub through a timeline. Since these are moments that most or every player encounters, they serve as reliable markers for the game to reference, ensuring that even if a player decides to jump back or forward, they can easily resume at a point of narrative significance and/or ease of setting up. This makes pinch points ideal for organizing the player's journey, as the game can pause or prompt the player at these key moments, offering context or recaps that maintain the flow of the story. Additionally, pinch points can help preserve the intended pacing of the game, as players who might otherwise skip over or miss important narrative elements are directed back to these shared experiences, ensuring they remain engaged with the core storyline and gameplay progression.

In the embodiment depicted in FIG. 5, a first pinch point 510 is conceptually shown as a single point to indicate that it is an area that most or all players will have to go through during gameplay. After this first pinch point 510, the player can enter a first gameplay scene 515 which is conceptually depicted as a plurality of arrows to indicate that there are multiple paths that the player can take during gameplay. For example, the player may move to different areas or take different paths. In some embodiments, the player may make different choices or utilize different moves during the first gameplay scene 515. Eventually, each of the paths within the first gameplay scene 515 can lead to a second pinch point 520. For example, each path in a level may eventually lead to a boss fight or a subsequent cutscene.

Likewise, the second pinch point 520 can lead to a second gameplay scene 525 with its own plurality of different paths and options, indicated by multiple arrows extending from the second pinch point 520. These paths also eventually lead to a third pinch point 530 that converges the player choices into a single or at least constrained area of the interactive game. As those skilled in the art will recognize, the number of pinch points and gameplay scenes may vary greatly depending on the type of game being developed and can have any number of pinch points depending on the story or choice of narrative design.

As such, within a timeline system, pinch points can be utilized to be a place where players can move forward or backward through during gameplay. This can be both a technological and logical start/stop point for timeline usage. For example, the game engine can be configured with certain assets in a fast-loading state for the plurality of finite pinch points that the player may scrub or stop on during gameplay. This can lead to a more seamless transition and load time. Similarly, some embodiments may focus on letting players re-start cutscenes or re-play certain scenes as desired in order to make sure they did not miss content.

Although a specific embodiment for an interactive gameplay flow through a plurality of pinch points suitable for carrying out the various steps, processes, methods, and operations described herein is discussed with respect to FIG. 5, any of a variety of systems and/or processes may be utilized in accordance with embodiments of the disclosure. For example, various embodiments may have branching or more complex arrangements of pinch points and gameplay scenes. The embodiment depicted in FIG. 5 is for explanatory purposes and is not meant to be limiting regarding shape and layout conceptually to the embodiments described herein. The elements depicted in FIG. 5 may also be interchangeable with other elements of FIGS. 1-4 and 6-12 as required to realize a particularly desired embodiment.

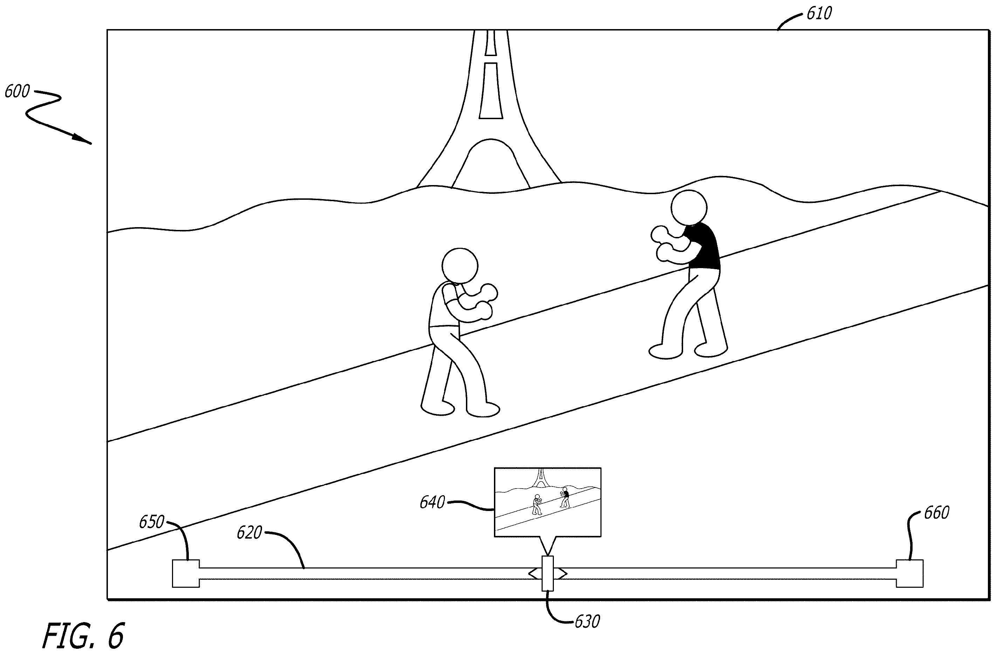

Referring to FIG. 6 a conceptual illustration of a timeline overlay within gameplay in accordance with various embodiments of the disclosure is shown. In the embodiment depicted in FIG. 6, a conceptual illustration of a timeline overlay 600 within gameplay in accordance with various embodiments of the disclosure. In many embodiments, a timeline 620 can be an effective tool for providing players with a visual representation of their progress and allowing them to control and navigate through the game's narrative and gameplay at their own pace. In various embodiments, the timeline overlay can be called up, generated, and/or displayed within the game engine or otherwise during gameplay. While certain elements may be streamed or otherwise dynamically loaded over a network, many embodiments comprise the ability to load or otherwise utilize the timeline features, including moving forward within a game without the need for streaming additional data. As will be discussed in more detail below, the usage of the timeline and the number of locations that can be selected can dynamically vary based on the current mode of the game.

When triggered by the user, this timeline 620 may appear as a solid or semitransparent bar at the bottom of the screen 610, ensuring it does not obstruct the core gameplay visuals while still being easily accessible. In some embodiments, the timeline 620 can display a series of markers that represent key events, cutscenes, pinch points, or player achievements, giving an at-a-glance overview of the game's progression. As the player moves a play head 630 along this timeline 620, a preview frame 640 can appear above the bar, showing a thumbnail image or short clip of the content associated with that specific moment, helping players identify where they are in the game and what they can expect if they jump to that point. The timeline 620 can have a beginning point 650 indicating how far back they can go within the interactive game as well as an end point 660 which shows the limit of their ability forward through. The beginning point 650 and/or end point 660 can vary based on various factors such as the player's preferences, the story being told, the previous choices of the player in a branching storyline, and/or technical/loading limitations.

The overlay's play head 630 can be dragged backward or forward along the timeline 620, allowing the player to rewind to earlier moments, revisit crucial story elements, or skip ahead to sections they've already completed (or not yet completed). This interactive functionality offers a seamless way for players to explore different parts of the game, whether they want to replay a challenging segment, catch up on missed story details, or fast-forward through areas they've already mastered or are having trouble getting past. In more embodiments, usage of the timeline 620 can allow players to travel from game point to game point without having to exit to other streaming content, menus, or otherwise exiting the game engine. In some embodiments, the timeline 620 may be utilized to jump from a first gameplay area directly to a second gameplay area. The timeline overlay 600 can also be color-coded or segmented to indicate different chapters, levels, or gameplay areas, providing additional context about where the player is within the larger narrative structure. As the play head 630 moves, the game can dynamically update the preview frame 640, offering immediate feedback and helping the player make informed decisions about where they want to jump within the timeline 620. By overlaying this timeline 620 on top of regular gameplay, players retain control over how they experience the game, while still being immersed in the game world.

Although a specific embodiment for a timeline overlay within gameplay suitable for carrying out the various steps, processes, methods, and operations described herein is discussed with respect to FIG. 6, any of a variety of systems and/or processes may be utilized in accordance with embodiments of the disclosure. For example, the structure or visual representation of the timeline 620 may be any shape or variation. For example, the timeline can be presented in a different area of the screen, may be presented as a circle, or in some games, become a gameplay element that is not an external overlay but an active element of gameplay existing within the gameplay world. The elements depicted in FIG. 6 may also be interchangeable with other elements of FIGS. 1-5 and 7-12 as required to realize a particularly desired embodiment.

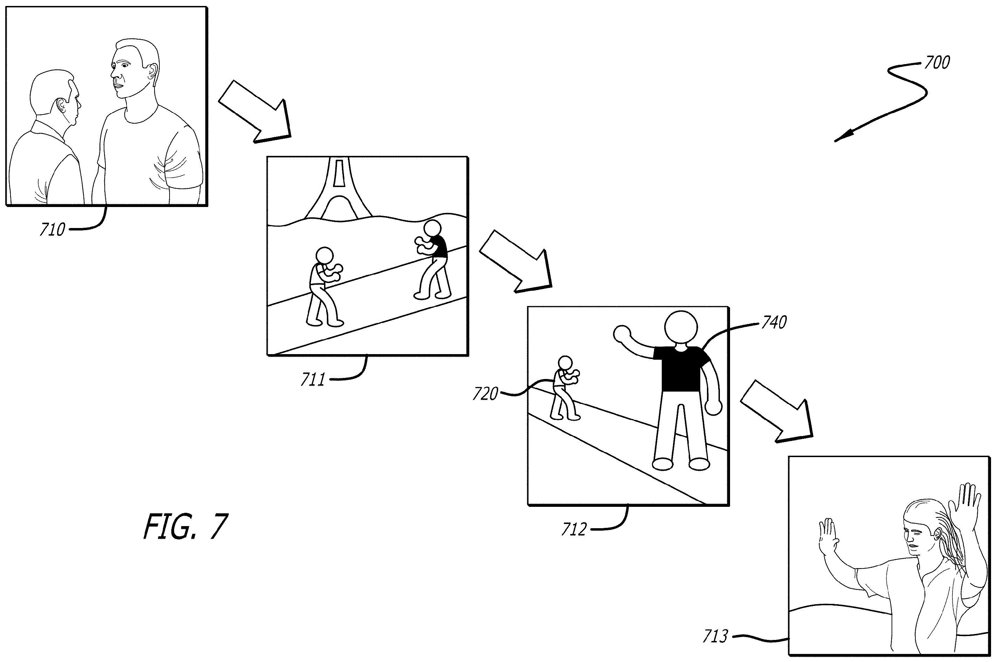

Referring to FIG. 7, a conceptual illustration of a plurality of gameplay modes 700 in accordance with various embodiments of the disclosure is shown. In interactive games, gameplay is often designed to transition seamlessly between various modes, each serving a distinct purpose in advancing the story, challenging the player, or building immersion within the game world. One of the most common gameplay modes is the cutscene, which is a non-interactive cinematic sequence that conveys key narrative elements, introduces characters, or sets the stage for upcoming gameplay events. Cutscenes are often used to provide context or emotional depth to the story and can occur at the beginning of a game to introduce the plot or appear between major gameplay sections to develop the storyline further. As players watch these cutscenes, they can gain a deeper understanding of the game's world and characters, establishing the stakes and motivations that drive their actions within the game. The embodiment depicted in FIG. 7 conceptually illustrates a first cutscene 710 where two people are talking to each other.

Following a cutscene, players are typically transitioned into an active gameplay mode, where they can have direct control over their character or environment. The embodiment depicted in FIG. 7 shows a first gameplay scene 711 where a player is in combat with an enemy of the stage. As those skilled in the art will recognize however, these modes can vary widely, encompassing exploration, puzzle-solving, racing, flying, combat, platforming, and/or stealth mechanics, depending on the game's genre and design. In this phase, players can engage with the game world, interact with NPCs, navigate challenges, and advance the narrative through their actions.

As players progress through the gameplay modes, they may transition again to encounter more intense gameplay modes, such as boss fights or quick-time events, which are designed in some instances to test the player's skills, strategies, and mastery of game mechanics. Boss fights can, for example, represent climactic moments within the game, requiring players to adapt and overcome more formidable challenges, and they serve as significant milestones in the player's journey. The embodiment depicted in FIG. 7 shows such a transition from the first gameplay scene 711 to a boss fight 712 where a player 720 encounters a boss character 740. In some embodiments, the game may be loaded within a video game system, such as a console, computer, etc. Game data related to the game engine or pinch points may be loaded within the memory of the video game system prior to utilization of the timeline or even gameplay. In certain embodiments, the pinch point data may be dynamically generated in response to one or more gameplay events or choices made by the player. This pinch point data may be generated and stored within the game engine, video game device, or other local computing system.

After successfully completing one or more interactive game modes, the game might transition back to another cutscene or shift into a different mode, such as a reward sequence, bonus level, or dialogue-driven interaction, to provide resolution, celebrate the player's achievements, or introduce the next phase of the story. In the embodiment depicted in FIG. 7, the boss fight 712 transitions to a second cutscene 713 showing another person talking with a closeup camera focused on them. Throughout an interactive game, these various gameplay modes work together to create a dynamic and engaging experience, allowing for a mix of storytelling, action, exploration, and challenge. By smoothly transitioning between cutscenes, gameplay areas, combat encounters, and other interactive elements, games maintain a sense of momentum and immersion, ensuring that players remain engaged with both the narrative and the gameplay mechanics as they progress through the game.

Although a specific embodiment for a plurality of gameplay modes suitable for carrying out the various steps, processes, methods, and operations described herein is discussed with respect to FIG. 7, any of a variety of systems and/or processes may be utilized in accordance with embodiments of the disclosure. For example, any combination of game modes may occur and can, such as in branching story games, can vary based on player choices, player types, play style, etc. It is contemplated that the embodiment depicted in FIG. 7 is shown for illustrative purposes and is not meant to be limiting to this specific interactive game structure. The elements depicted in FIG. 7 may also be interchangeable with other elements of FIGS. 1-6 and 8-12 as required to realize a particularly desired embodiment.

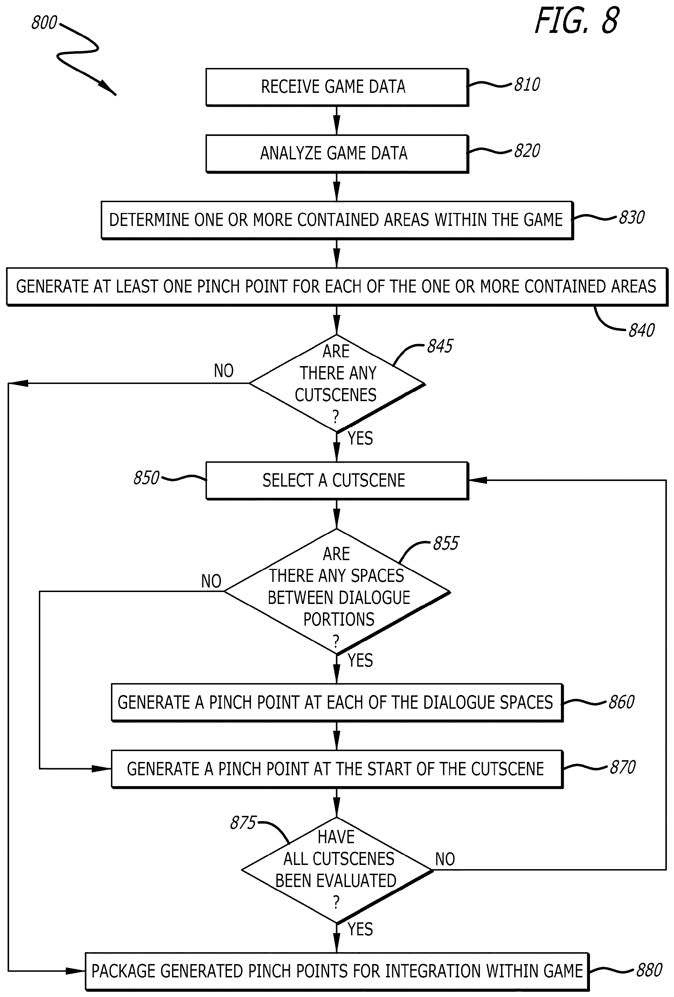

Referring to FIG. 8, a process 800 for automatically generating pinch points in accordance with various embodiments of the disclosure is shown. In many embodiments, the process 800 can receive game data (block 810). This can begin by analyzing the structure and flow of the game in development. In some embodiments, the game data may include narrative sequences, gameplay events, and key progression elements. It may also include information such as mission completion markers, boss battles, major cutscenes, and/or key decision-making moments that can significantly impact the game's progression.

In a number of embodiments, the process 800 can analyze the game data (block 820). This may begin by parsing and evaluating various elements of the game data. This analysis can involve several types of evaluations, including narrative structure analysis, gameplay event sequencing, and player progression mapping. The system may examine key narrative beats, such as important cutscenes, dialogue exchanges, or major story transitions, to determine where critical plot points occur. It can also analyze gameplay mechanics, such as difficulty spikes, boss battles, or mandatory puzzles, identifying where players are likely to encounter significant challenges or objectives that must be completed to advance. Additionally, the system may perform behavioral pattern analysis based on expected player interaction, mapping out sections of the game where all players converge regardless of their chosen path or play style. By cross-referencing these different data points, such as narrative importance, gameplay difficulty, and progression dependencies, the system can create a comprehensive understanding of the game's structure.

In more embodiments, the process 800 can determine one or more contained areas within the game (block 830). These contained areas can be identified by examining moments where all players, regardless of their individual choices or paths, may pass through to progress further in the game. In some embodiments, the system can use narrative dependencies, such as story arcs that converge on a single event, and gameplay structures, like boss battles or pivotal challenges, to locate these points. For example, if a particular quest or mission is integral to advancing the story, or if a certain boss fight marks the transition between two major gameplay segments, the system can flag these as contained areas. Additionally, the process 800 may, in certain embodiments, analyze branching paths within the game and determines where they eventually funnel back into a unified track, ensuring that these critical points are recognized as places most players will encounter.

In additional embodiments, the process 800 can determine if there are any cutscenes (block 845). In some embodiments, the process 800 can determine if there are any cutscenes within the game data by scanning for predefined markers or tags that identify cinematic sequences, such as specific file types, animation triggers, or scripted event chains. The process 800 may also analyze the game's timeline or event structure for moments where player control is paused or transferred to non-interactive scenes, which typically indicate the presence of a cutscene. Additionally, the process 800 could, in various embodiments, evaluate dialogue triggers, camera transitions, and character animations that align with narrative-driven sequences, confirming these as cutscenes.

If it is determined that no cutscenes exist, the process 800 can package any generated pinch point for integration within the game (block 880). However, if it is determined that there is at least one cutscene within the game, the process 800 can in various embodiments, select a cutscene (block 850). As those skilled in the art will recognize, there may be a plurality of cut scenes within a game and can vary from game type to game type.

In further embodiments, the process 800 can determine if there are any spaces between dialogue portions within the cutscene (block 855). In some embodiments, the process 800 could analyze the game data by examining the timing and structure of dialogue triggers within the cutscene, identifying pauses or gaps between lines of dialogue. It may detect these spaces by evaluating timestamps or markers that denote when one dialogue segment ends and another begins, flagging any intervals of silence or non-dialogue action. Additionally, the process 800 could assess the flow of animations or camera transitions during these gaps, recognizing moments where the focus shifts from dialogue to visual storytelling or other in-scene interactions.

If there are no spaces, the process 800 can generate a pinch point at the start of the cutscene (block 870). The process may generate a pinch point in relation to a cutscene by identifying the start and end of the cutscene as crucial moments that all players will experience, marking them as key narrative events. By analyzing the transitions into and out of the cutscene, such as the moments when player control is paused and then resumed, the process 800 can flag these points as critical for progression.

However, if it is determined that there are spaces between dialogue portions within a cutscene, the process 800 can, in certain embodiments, generate a pinch point at each of the dialogue spaces (block 870). The pinch point could be represented in the game data as a flagged marker or node within the timeline, indicating a specific moment tied to critical or narrative gameplay events. This marker could be associated with metadata, such as timestamps, event triggers, or cutscene identifiers, ensuring the system recognizes it as a key moment that all players may experience. Additionally, the process 800 could further refine the pinch point by pinpointing specific moments within the cutscene, like pivotal dialogue exchanges or visual reveals, ensuring players engage with essential story elements.

Subsequently, the process 800 can, in some embodiments, further determine if all of the cutscenes have been evaluated (block 875). If it is determined that not all of the cutscenes have been evaluated, then certain embodiments of the process 800 can again select a cutscene for evaluation (block 850). However, if it is determined that all of the cutscenes have been evaluated, then the process 800 can, in still more embodiments, package the generated pinch points for integration within the game (block 880). In numerous embodiments, this package can be put together into a structured set for the game developer to use as a foundational starting point. The package could be presented as a timeline or list, with each pinch point labeled and categorized according to its type (e.g., cutscene, boss fight, major decision). Each entry could include additional metadata, such as the associated dialogue, trigger conditions, or gameplay mechanics, providing developers with context for why each pinch point was flagged. This comprehensive package can allow the developer to quickly review and approve, modify, or refine the automatically generated pinch points, significantly speeding up the process of implementing essential story and gameplay markers. By having an initial outline to work from, developers can focus their efforts on fine-tuning the game's progression without starting from scratch, ensuring that key moments are consistently highlighted and integrated throughout the game's development process.

Although a specific embodiment for a process 800 for automatically generating pinch points suitable for carrying out the various steps, processes, methods, and operations described herein is discussed with respect to FIG. 8, any of a variety of systems and/or processes may be utilized in accordance with embodiments of the disclosure. For example, other triggers may be utilized to determine pinch points beyond just identifying the contained areas. For example, any locations that are determined to be important or likely visited by all players can be selected. The elements depicted in FIG. 8 may also be interchangeable with other elements of FIGS. 1-7 and 9-12 as required to realize a particularly desired embodiment.

Referring to FIG. 9, a diagram 900 depicting various subsets of artificial intelligence in accordance with various embodiments of the disclosure is shown. Artificial intelligence (AI) 910 is typically understood in the art to be the development of machines and algorithms that mimic human intelligence, for example, by optimizing actions to achieve certain goals. At its core, AI 910 often involves designing algorithms and models that mimic cognitive functions, such as learning, reasoning, problem-solving, perception, and even language understanding. Unlike traditional computer programs that follow a fixed set of instructions, AI systems have the ability to adapt, improve, and make decisions based on input data and environmental interactions.

AI 910 can be considered a generic term because it encompasses a wide range of subfields and techniques, from simple rule-based systems to advanced machine learning and deep learning models. These AI techniques are used to simulate various aspects of human cognition. For example, machine learning (ML) 920 allows computers to learn from data patterns without explicit programming for each task, while natural language processing (NLP) enables machines to understand and generate human language. Deep learning (DL) 930, a more advanced branch of AI, uses neural networks to automatically learn complex patterns from large datasets, akin to the human brain's information processing. This versatility makes AI a powerful tool across diverse applications, including image recognition, autonomous driving, voice assistants, healthcare diagnostics, and materials discovery.

A goal of AI is often to create systems that can function autonomously and intelligently in real-world scenarios. As AI 910 continues to evolve, it can increasingly mirror human-like cognition, enabling machines to not just process data but to "think" in a way that can handle uncertainty, make predictions, and even interact with their surroundings in a meaningful manner. While AI systems are far from achieving the full breadth of human intelligence, their ability to replicate specific cognitive functions makes them invaluable in tackling complex, data-driven challenges.

Machine Learning (ML) 920 is a subset of Artificial Intelligence (AI) 910 that focuses on the development of algorithms and statistical models that enable computers to learn and make decisions from data without explicit programming. In traditional programming, a computer is given a fixed set of rules to follow, but ML 920 can shift this paradigm by allowing systems to identify patterns, adapt, and improve their performance based on the data they encounter. This data-driven approach makes ML particularly valuable for tasks that are too complex or dynamic to define using straightforward rules, such as, for example, recognizing images, predicting consumer behavior, or diagnosing diseases. In various embodiments described herein, machine-learning methods may be utilized to control the display, usage, or other aspects about a timeline control system within an interactive game.

ML models can be configured to analyze large amounts of data to identify trends and relationships that inform their predictions or classifications. The process typically involves three stages: training, validation, and testing. During training, the model learns from a dataset by adjusting its internal parameters to minimize errors between its predictions and the actual results. Techniques like linear regression, decision trees, random forests, and Gaussian processes are commonly used in ML 920. These algorithms can handle various data types, including numerical, categorical, and structured datasets like spreadsheets or grids. One of the key strengths of ML is its ability to generalize from the training data to make accurate predictions on new, unseen data. In a number of embodiments described herein, training data may be generated from historical player data, developer inputs, quality assurance/testing feedback, among other sources.

However, traditional ML methods rely heavily on feature engineering, wherein human experts manually identify the most relevant features or patterns within the data. For example, when using ML 920 for image recognition, an expert might need to extract features like edges, textures, or color patterns before feeding them into a model. This requirement can limit the scalability of traditional ML approaches, especially when dealing with large, unstructured datasets such as images, text, or graphs. Additionally, ML algorithms may often work best when provided with relatively structured data, and they often need a reasonable amount of samples (typically more than 90) to learn effectively.

Deep Learning (DL) 930 is a specialized subset of Machine Learning (ML) 920 that employs multi-layered artificial neural networks to automatically learn complex patterns and representations from large, often unstructured datasets. Inspired by the way the human brain processes information, DL 930 consists of interconnected layers of "neurons" that can adaptively change as they are exposed to more data. Unlike traditional ML methods, which require manual feature engineering to identify key data characteristics, DL models can automatically extract features directly from raw data, such as images, text, or molecular structures. This automated feature extraction allows DL 930 to handle data types and tasks that were previously difficult or impossible for ML models to tackle effectively.

DL models, including Convolutional Neural Networks (CNNs), Graph Neural Networks (GNNs), and Recurrent Neural Networks (RNNs), excel at processing various forms of data. CNNs are particularly effective for image analysis, recognizing intricate patterns in visual inputs, making them indispensable in areas like materials science for analyzing microscopic images or detecting defects in materials. GNNs, on the other hand, are designed to work with graph-based data, such as molecular structures, social networks, or atomic interactions. They can learn the dependencies and relationships within graph-like structures, which is crucial for predicting properties of complex molecules and materials. RNNs and their variants, such as Long Short-Term Memory (LSTM) networks, are suited for sequential data like time series or natural language processing, allowing for the analysis and generation of textual information or the prediction of temporal patterns in scientific research.

One of the defining characteristics of deep learning is its requirement for large datasets (typically over 500 samples for example) to effectively train neural networks. The deep, multi-layered structure of these networks enables them to capture highly complex and abstract representations of the data, but it also demands significant computational power. Techniques like Variational Autoencoders (VAEs) and Generative Adversarial Networks (GANs) add to the versatility of DL by enabling the generation of new data samples that resemble the training set, aiding in areas such as materials discovery and synthetic data creation. Deep Reinforcement Learning (DRL) combines neural networks with decision-making processes to solve problems that involve optimization and control, further expanding DL's application potential. In summary, DL's ability to automatically learn from raw, unstructured data and model intricate patterns makes it a powerful tool in AI, particularly for complex domains like image recognition, natural language processing, and materials science.

Artificial Neural networks (ANNs or sometimes just NNs) are often a foundation of a DL system. The basic unit of a neural network is typically the perceptron, which can take inputs, assigns weights to these inputs, and combines them to produce an output. The final output is then passed through an activation function (such as, for example, ReLU, sigmoid, or hyperbolic tangent) to introduce non-linearity, which enables the network to model complex patterns.

Neural networks are typically trained through a process of backpropagation, where the system's predictions are compared against the known output, and a loss function is used to measure the difference between the prediction and the actual result. The network's weights can be adjusted through a process called gradient descent, which can be configured to minimize the loss function over time. However, the training process can be prone to problems like overfitting (where the model performs well on the training data but poorly on new data). To counter this, techniques such as regularization (e.g., regularization, dropout), early stopping, and mini-batches can be utilized to prevent the network from becoming overly specialized to the training set.

CNNs are a specific type of ML 920 neural network designed to work particularly well with image data, making them highly relevant for as image data can be generated within an interactive game and thus be subject to processing. As those skilled in the art will recognize, CNNs typically use specialized layers known as convolutional layers, which apply filters (also known as kernels) to the input data. These filters slide over the input (e.g., an image), detecting patterns like edges or textures, which are then passed to the next layer for further processing. The advantage of CNNs is their ability to automatically learn and extract relevant features from raw data without the need for manual feature engineering. Furthermore, pooling layers (e.g., max-pooling or average pooling) are often added after convolutional layers to reduce the dimensionality of the data, helping to make the system more efficient while retaining the most important information. After several layers of convolutions and pooling, the CNN can output a prediction, such as what locations within an interactive game would be good for generating pinch points, or landing/restarting upon scrubbing with the timeline.

While CNNs are well-suited for grid-based data like images, many real-world problems in can involve non-grid data, such as player/asset locations, cinematic rules, or player/asset interactions. This type of data may better be represented as a graph, where nodes represent entities (e.g., assets) and edges represent relationships between them (e.g., characteristics/timeline location values). Thus, Graph Neural Networks (GNNs) can be utilized to operate on such graph-based data.

In GNNs, information is passed between nodes through edges in a process called message passing. This allows the network to capture dependencies and relationships within the graph structure. The key feature of GNNSs is their ability to aggregate information from neighboring nodes, which is crucial in predicting properties that depend on the current/local structure, such as the behavior of an asset or the properties associated with a timeline.

Generative models aim to learn the underlying distribution of a dataset and generate new samples that resemble the original data. Two common types of generative models are Variational Autoencoders (VAEs) and Generative Adversarial Networks (GANs). VAEs are often configured to work by encoding data into a lower-dimensional latent space and then decoding it back into its original form. This allows for the generation of new data by sampling points from the latent space. This can be utilized when attempting to construct potential pinch point locations or the like.

Similarly, GANs consist of two components: a generator that creates fake/generated data and a discriminator that tries to distinguish between real and fake data. The two components are trained in a competitive process where the generator tries to "fool" the discriminator, leading to increasingly realistic generated data. This type of process may be utilized to compare proposed game content to potential pinch point locations.

Reinforcement Learning (RL) involves an agent learning to make decisions by interacting with an environment and receiving feedback (rewards or penalties) based on its actions. Deep Reinforcement Learning (DRL) combines RL with DL techniques, allowing agents to learn from high-dimensional inputs, such as images or complex pinch point preview simulations.

In interactive games, DRL can be used in scenarios where an optimal decision needs to be made, such as optimizing the restarting of a game upon selection by a timeline or finding the best configuration for asset loading based on the desired or current properties of the timeline(s). The combination of RL and DL can allow for learning from raw data, making it a powerful tool for dynamic and real-time decision-making within an interactive game.

Although a specific embodiment for a diagram 900 depicting various subsets of artificial intelligence suitable for carrying out the various steps, processes, methods, and operations described herein is discussed with respect to FIG. 9, any of a variety of systems and/or processes may be utilized in accordance with embodiments of the disclosure. For example, other subset may be present and available for use within AI 910. Those skilled in the art will recognize that the diagram 900 presented in FIG. 9 is simplified for illustration purposes and various methods and techniques may interact with other areas (ML 920 with DL 930, etc.). The elements depicted in FIG. 9 may also be interchangeable with other elements of FIGS. 1-8 and 10-12 as required to realize a particularly desired embodiment.

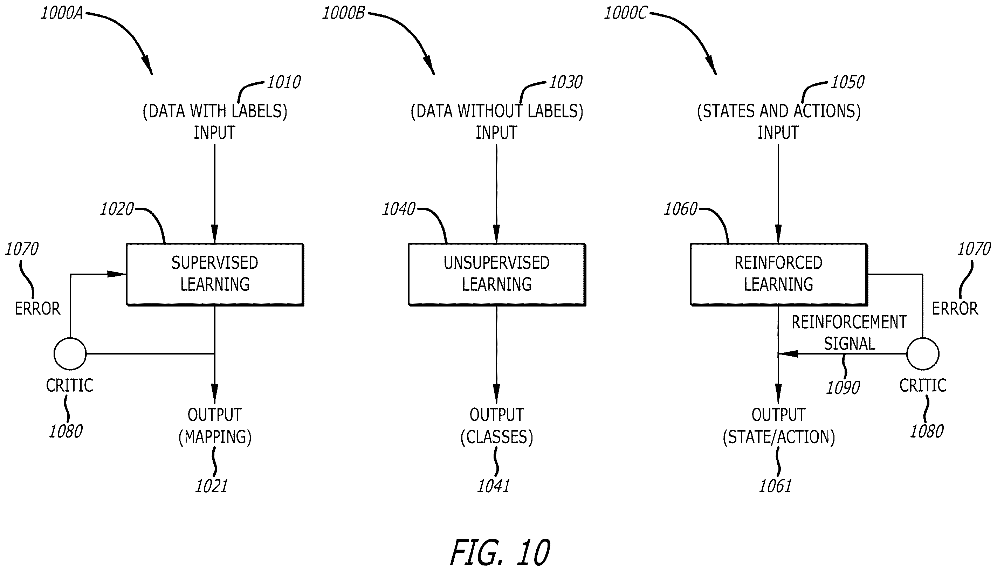

Referring to FIG. 10, different methods of machine-based learning in accordance with various embodiments of the disclosure are shown. In many embodiments, a machine learning model is defined as a mathematical representation of the output of the training process. A machine learning model is often considered similar to computer software designed to recognize patterns or behaviors based on previous experience or data. However, the learning algorithm can discover patterns within the training data, and output an ML model which can capture these patterns and make predictions on new data.

ML models can be understood as a device that has been trained to find patterns within new data and make predictions. These models can be represented as a complex mathematical function that would be impractical for a human to calculate that takes requests in the form of input data, makes predictions on input data, and then provides an output in response. First, these models can be trained over a set of data, and then they are provided an algorithm or other task to reason over data, extract the pattern from feed data and learn from that data. Once the model(s) is/are trained, they can be used to predict a new and previously unseen dataset.

There are various types of machine learning models available based on different business goals and data sets available. Often, based on the desired application, ML models can be configured as or settle into one of three different model types: supervised learning, unsupervised learning, and/or reinforcement learning. Supervised learning can further be broken down into two categories of classification and regression. Likewise, unsupervised learning can be divided into three categories: clustering, association rule, and/or dimensionality reduction.

In the embodiment depicted in FIG. 10, a supervised learning system 1000A is shown. The supervised learning system 1000A can be configured with a supervised learning model 1020 that accepts input data 1010 and generates an output 1021. However, the output data is often reviewed by a critic 1080 that can determine one or more errors 1070 that are fed back into the supervised learning model 1020 for use in updating.

Supervised learning systems 1000A are often considered the simplest machine learning model to understand in which input data (such as training data) has a known label or result as an output. So, the supervised learning model 1020 can be understood to work on the principle of input-output pairs. As such, a function can be trained using a training data set, which is then applied to unknown data and makes some predictive performance. Supervised learning is task-based and mostly tested on labeled data sets.

Supervised learning systems 1000A may often involve one or more regression problems. In regression problems, the output is a continuous variable. Some commonly used Regression models include linear regression, decision trees, and random forests. Linear regression is typically the most straight forward machine learning model in which a prediction of one output variable is made using one or more input variables. The representation of linear regression can be processed as a linear equation, which combines a set of input values (denoted as x) and a predicted output (denoted as y) for the set of those input values. As those skilled in the art will recognize, this may be represented in the form of a line: Y = bx+ c. A typical aim of a linear regression-based model can be to find the optimal fit line that best fits the available data points. Linear regression can be extended to multiple linear regressions (finding a plane of best fit in higher dimensional space) and polynomial regressions (finding the best fit curve).

Decision trees are also popular machine learning models that can be used for both regression and classification problems. A decision tree uses a tree-like structure of decisions along with their possible consequences and outcomes. In this, each internal node is used to represent a test on an attribute while each branch is used to represent the outcome of the test. The more nodes a decision tree has, the more accurate the result will be. This may be used when making decisions related to what locations within the game should be associated with a pinch point, etc. The advantage of decision trees is that they are intuitive and easy to implement, but may lack accuracy depending on the available computational or time resources available.

Random forests are an ensemble learning method, which may consist of a large number of decision trees. For example, each decision tree in a random forest predicts an outcome, and the prediction with the majority of votes is considered as the outcome. A random forest model can be used for both regression and classification problems. For the classification task, the outcome of the random forest may be taken from the majority of votes. Whereas in the regression task, the outcome can be taken from the mean or average of the predictions generated by each tree.

Classification models are another type of supervised learning, which can be used to generate conclusions from observed values in one or more categorical forms. For example, a classification model can identify if an email is spam or not; whether a certain location within a game is suitable for a timeline pinch point location, etc. Classification algorithms can also be used to predict between two or more classes and/or categorize an output into different groups. For these classification systems, a classifier model can be designed that classifies the dataset into different categories, and each category can subsequently be assigned a label. As those skilled in the art will recognize, there are currently two main types of classifications in machine learning: binary and multi-class. Binary classification can be utilized when there are only two possible classes (i.e., yes/no, dog/cat, etc.). Multi-class classification can be utilized when there are more than two possible classes, thus requiring a multi-class classifier.

One of the potential classification processes is logistic regression. Logistic regression can be used to solve various classification problems in machine learning systems. These processes are similar to linear regression but are often used to predict categorical variables. While some variations can be configured to generate a prediction as an output in either "yes" or "no", 0 or 1, "true" or "false", etc. However, in some embodiments, the system can instead be configured to not give exact values, but instead provide probabilistic values between zero and one, etc.

Another classification process that can be utilized is a support vector machine (SVM) which is widely used for classification and regression tasks. However, the main aim of SVM is to find the best decision boundaries in an N-dimensional space, which can be utilized to segregate data points into classes, and generate a best decision boundary often known as a hyperplane. SVM processes can select the extreme vector to find a hyperplane, wherein these vectors are known as support vectors.

Naive Bayes is another popular classification algorithm used in machine learning. This process receives its name as it is based on Bayes theorem and follows the naïve(independent) assumption between the features which is often given as the formula: $P \left(\left.y\right|X\right) = \frac{P \left(\left.X\right|y\right) ∗ P \left(y\right)}{P \left(X\right)}$

This formula takes a class or target y and a predictor attribute (X) and calculates a posterior probability P(y|X) of that class given a particular predictor. P(y) is the prior probability of that class, P(X) is the prior probability of the predictor, and P(X|y) is the likelihood or probability of the predictor given the class. As those skilled in the art will recognize, this may be more succinctly understood as the posterior chance being a result of the prior results times the likelihood divided by the evidence available. Each naïve Bayes classifier assumes that the value of a specific variable is independent of any other variable/feature. For example, if a fruit needs to be classified based on color, shape, and taste. So yellow, oval, and sweet will be recognized as mango. Here each feature is independent of other features. Likewise, various embodiments herein can classify based on timeline status, player historical data, available branches, etc.

Again, in the embodiment depicted in FIG. 10, an unsupervised learning system 1000B is shown. The unsupervised learning system 1000B can be configured with an unsupervised learning model 1040 that accepts input data 1030 and generates an output 1041. Unlike other model types, there are no critics or error signals to process. Unsupervised learning models 1040 can implement the learning process opposite to supervised learning, which means it enables the model to learn from an unlabeled training dataset. Based on the unlabeled dataset, the unsupervised learning model 1040 can predict the output. Using an unsupervised learning system 1000B, the unsupervised learning model 1040 can learn hidden patterns from the dataset by itself without any supervision. In various embodiments, unsupervised learning models 1040 are often utilized to perform tasks involving clustering, association rule learning, and/or dimensional reduction.

Clustering is an unsupervised learning technique that involves clustering or grouping the available data points into different clusters based on similarities and/or differences. The objects or data points with the most similarities remain in the same group, and they have no or very few similarities from other groups. Clustering algorithms can be used in a variety of different tasks such as, but not limited to image segmentation, statistical data analysis, market segmentation, and the like. Some commonly used clustering algorithms that can be selected include K-means Clustering, hierarchal Clustering, DBSCAN, etc.

Association rule learning is an unsupervised learning technique which finds unique relations among variables within a large data set. In many embodiments, a primary aim of this type of learning algorithm is to find the dependency of one data item on another data item and map those variables accordingly so that it can satisfy some desired outcome. For example, in certain embodiments, an association rule system may be utilized to generate a plurality of pinch point suggestions automatically. This algorithm can be applied in market basket analysis, web usage mining, continuous production, etc. However, those skilled in the art will recognize that other scenarios may be available based on the desired application. Some popular algorithms of association rule learning are Apriori Algorithm, Eclat, and FP-growth algorithm.

In additional embodiments, the number of features/variables present in a dataset can be understood as the dimensionality of the dataset, and the technique used to reduce the dimensionality is known as a dimensionality reduction technique. Although more data provides more accurate results, it can also affect the performance of the model/algorithm, such as yielding overfitting outcomes, etc. In such cases, dimensionality reduction techniques can be utilized. It is often desired that this process involves converting the higher dimensions dataset into lesser dimensions dataset while also ensuring that the ensuing results provide similar information. Different dimensionality reduction methods can be utilized, such as, but not limited to, PCA (Principal Component Analysis), Singular Value Decomposition (SVD), etc.

Finally, in the embodiment depicted in FIG. 10, a reinforcement learning system 1000C is shown. The reinforcement learning system 1000C can be configured with a reinforcement learning model 1060 that accepts input data 1050 and generates an output 1061. In reinforcement learning, the reinforcement learning model 1060 learns actions for a given set of states that lead to a goal state. In the embodiment depicted in FIG. 10, a critic 1080 can receive or otherwise notice an error 1070 within the reinforcement learning model 1060 actions, and adjust the outcome/output such that the "reward" or "punishment" is adjusted to better model the future behaviors or processing of the reinforcement learning model 1060.

It is a feedback-based learning model that can takes feedback signals after each state or action by interacting with the environment. This feedback works as a reward (positive for each good action and negative for each bad action), and the agent's goal is to maximize the positive rewards to improve their performance. The behavior of the model in reinforcement learning is similar to human learning, as humans learn things by experiences as feedback and interact with the environment. Popular methods of reinforcement learning including q-learning, state-action-reward-state-action (SARSA), and deep Q network.

Q-learning is one of the popular model-free algorithms of reinforcement learning, which is based on the Bellman equation. It often aims to learn the policy that can help the AI agent to take the best action for maximizing the reward under a specific circumstance. It can incorporate Q values for each state-action pair that indicate the reward to following a given state path, and it tries to maximize that Q-value.

SARSA is an on-policy algorithm based on the Markov decision process. In many embodiments, it can use the action performed by the current policy to learn the Q-value. The SARSA algorithm stands for State Action Reward State Action, which symbolizes the tuple (s, a, r, s', a'). Finally, deep Q neural networking (or DQN) is Q-learning within a neural network. It can be deployed within a big state space environment where defining a Q-table would be a complex task. So, in these embodiments, rather than using a Q-table, the neural network instead utilizes Q-values for each action based on the state.

Although a specific embodiment for different methods of machine-based learning suitable for carrying out the various steps, processes, methods, and operations described herein is discussed with respect to FIG. 10, any of a variety of systems and/or processes may be utilized in accordance with embodiments of the disclosure. For example, those skilled in the art will recognize that methods of learning described herein are generalized and may incorporate other types developed as well as a combination of one or more methods based on the goals of the desired application. The elements depicted in FIG. 10 may also be interchangeable with other elements of FIGS. 1-9 and 11-12 as required to realize a particularly desired embodiment.

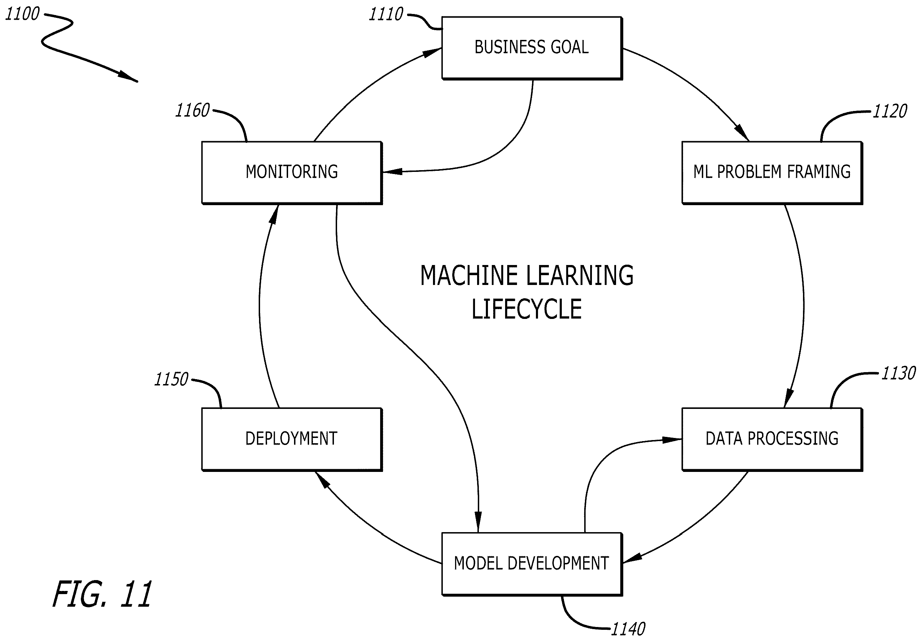

Referring to FIG. 11, a machine learning lifecycle 1100 in accordance with various embodiments of the disclosure is shown. During the development of machine learning systems, the embodiment depicted in FIG. 11 can provide a framework for how to structure the design and maintenance of these systems. This machine learning lifecycle 1100 outlines various stages involved in building, deploying, and improving ML models to solve real-world problems. By following this structured process, businesses and organizations can ensure that their machine learning projects align with strategic goals, use data effectively, and adapt to changing conditions over time. This machine learning lifecycle 1100 emphasizes that developing a machine learning model is not a one-time effort but an iterative process requiring ongoing monitoring and adjustment. The feedback loop inherent in the machine learning lifecycle 1100 allows for continual refinement and optimization of models to maintain their accuracy and relevance.

In many embodiments, a first stage of the machine learning lifecycle 1100 is identifying the business goal 1110, which sets the overall direction and purpose of the ML project. This can involve understanding the specific problems or opportunities within the business or project that machine learning can address. A clear business goal 1110 ensures that the project remains focused on delivering tangible value, whether it is improving player experiences, optimizing gametime operations, predicting pinch point locations, or automating timeline management. Without a well-defined goal, it can be challenging to align the subsequent stages of the ML lifecycle 1100, as the choice of model, data processing methods, and performance metrics can all depend on what the business aims to achieve.

Establishing a proper business goal 1110 can also involve engaging with key stakeholders and developers to gather requirements and set success criteria. It can provide a roadmap that outlines what success looks like and helps in framing the ML problem. For example, if the goal is to reduce processor overhead, the project might focus on building a predictive model that identifies potential bottlenecks, allowing the game engine to intervene proactively. Clearly defined goals not only help guide the project but also provide benchmarks for evaluating the effectiveness of the deployed model once it enters production.

Once the business goal 1110 is established, various embodiments take a next step involving ML problem framing 1120, wherein the goal is translated into a specific machine learning task. This can involve selecting the appropriate type of ML problem, such as classification, regression, clustering, or recommendation, and defining the target variables or outputs. For example, if the goal is to identify processor bottlenecks, the problem can be framed as a binary classification task where the model predicts whether a certain number of assets will cause the game engine to slow down. Proper problem framing can be important as it determines the particular data requirements, choice of model, and evaluation metrics.

During this stage, it is also prudent to consider the constraints and assumptions that may affect the model's development. This might include data availability, computational resources, ethical considerations, or regulatory compliance. Properly framing the problem ensures that the model development aligns with the business's needs and that the problem is broken down into manageable steps, ultimately increasing the project's chances of success.

Data processing 1130 is a step in many embodiments where raw data is collected, cleaned, and transformed into a format suitable for machine learning. This step can involve gathering data from various sources, removing errors or inconsistencies, handling missing values, and normalizing or scaling features to ensure that the model can learn effectively. Feature engineering is often a part of this stage, where new features are derived from the raw data to capture more relevant information and improve model performance.

The quality and preparation of the utilized data can significantly impact the model's accuracy and reliability. Inadequate or poorly processed data can lead to biased or inaccurate predictions, no matter how advanced the model is. Hence, data processing 1130 can require or at least benefit from careful planning and iterative refinement. Once the data is processed, it is typically split into training, validation, and test sets to develop and evaluate the model, ensuring that it generalizes well to new, unseen data.

Model development 1140 is a phase in a number of embodiments where machine learning algorithms are selected, trained, and refined to create a model that addresses the framed problem. This stage can involve choosing the appropriate algorithm (e.g., decision trees, neural networks, support vector machines), setting up the model's architecture, and defining hyperparameters that will guide the training process. The model is trained on the processed data to identify patterns and relationships that allow it to make predictions or decisions.

During model development 1140, the model can be evaluated using the validation dataset to fine-tune its parameters and improve performance. Techniques like cross-validation, regularization, and hyperparameter tuning can be used to prevent overfitting and ensure the model generalizes well. If proper steps are taken, the result is a model that, once it meets predefined performance metrics, is ready for deployment in a real-world environment. However, this process often involves several iterations to optimize the model for the specific business goal, indicated by the arrow back to data processing 1130.

In further embodiments, deployment 1150 is the stage where the developed model is integrated into the production environment to perform its intended tasks. This phase may involve setting up the necessary infrastructure, such as APIs or cloud-based services, to allow the model(s) to process live data and generate predictions. Deployment 1150 can transform the model from a research tool into a functional component of a business process or product, providing real-time insights, automations, or decisions.

Proper deployment 1150 can also include setting up mechanisms for logging, error handling, and user access. Since real-world environments are often dynamic and differ from training conditions, deployment may require continuous adaptation and updates to ensure the model(s) operates efficiently. This step can be important because a model's success is not only determined by its performance metrics but also by its ability to provide actionable results that align with the business goal 1110.

In more embodiments, monitoring 1160 is the ongoing process of tracking the model's performance and behavior after deployment. It involves collecting data on the model's predictions, accuracy, latency, and error rates to detect issues such as concept drift, where changes in the underlying data patterns can degrade the model's accuracy. By continuously monitoring 1160, teams can identify when the model's performance drops and requires retraining or adjustments to align with the evolving data.

Monitoring 1160 can also encompass aspects like user feedback, security, and compliance, ensuring that the model remains effective, reliable, and ethical in its application. It may serve as the feedback loop in the lifecycle, where insights gained from monitoring feed back into the earlier stages, particularly data processing 1130 and model development 1140, to refine the model(s) as needed. This iterative process allows the machine learning system to adapt and maintain its alignment with the original business goal 1110 over time.

Although a specific embodiment for a machine learning lifecycle 1100 suitable for carrying out the various steps, processes, methods, and operations described herein is discussed with respect to FIG. 11, any of a variety of systems and/or processes may be utilized in accordance with embodiments of the disclosure. For example, the particular route of development of the model(s) may not follow this cycle completely. As those skilled in the art will recognize, there are a variety of ways to develop AI products that include various iterative steps that aide in development and refinement of different model(s). The elements depicted in FIG. 11 may also be interchangeable with other elements of FIGS. 1-10 and 12 as required to realize a particularly desired embodiment.

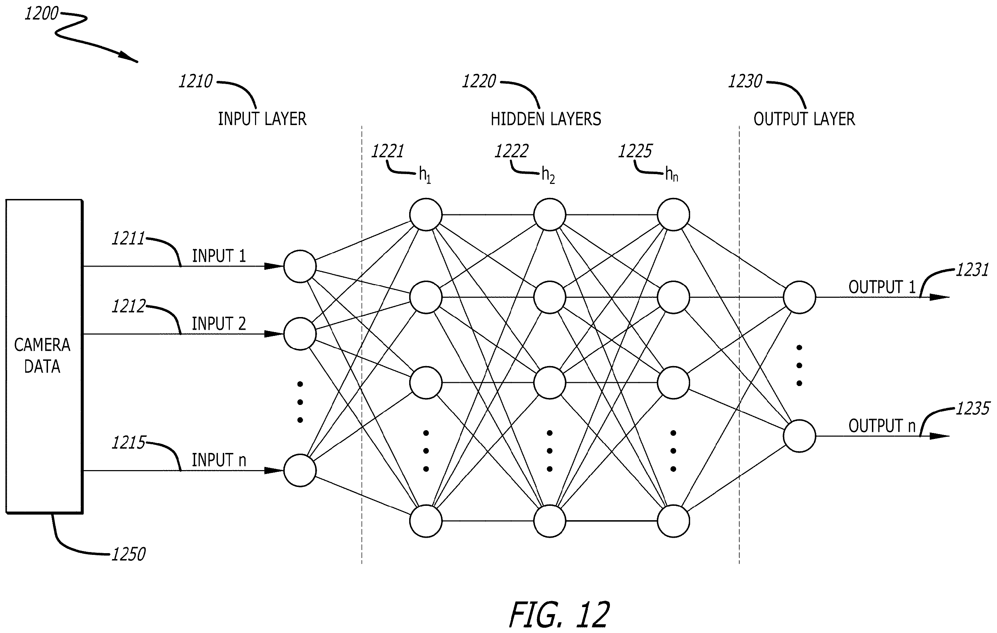

Referring to FIG. 12, an exemplary neural network 1200 in accordance with various embodiments of the disclosure is shown. The embodiment depicted specifically depicts a feedforward neural network with multiple layers. This type of network consists of an input layer 1210, one or more hidden layers 1220, and an output layer 1230. Each layer contains nodes (or neurons) that are interconnected, representing how data flows through the network. The input layer 1210 can receive raw data, which is then processed by the hidden layers 1220 through weighted connections and activation functions. These hidden layers 1220 can enable the network to learn complex patterns and relationships within the data.

The final output layer 1230 produces the network's predictions or classifications based on the processed input. The interconnected nature of the nodes allows the neural network 1200 to learn from data during training by adjusting the weights of connections to minimize prediction errors. This structure is the foundation of deep learning models, as adding more hidden layers 1220 can create a deep neural network, capable of tackling highly complex tasks such as image recognition, natural language processing, and pattern detection in large datasets.

A perceptron or a single artificial neuron is the building block of artificial neural networks (ANNs) and can perform forward propagation of information. For a set of inputs to the perceptron, weights (and biases to shift wights) can be assigned. These inputs and weights can be multiplied out correspondingly together to get a sum output. Those skilled in the art will recognize tools such as, but not limited to, PyTorch, Tensorflow, and MXNet as training packages for common neural network tasks. However, it is contemplated that other tools may be developed specifically for the neural network tasks related to the embodiments described herein.

In additional embodiments, the weight matrices of a neural network can be initialized randomly or obtained from a pre-trained model. These weight matrices can be multiplied with the input matrix (or output from a previous layer) and subjected to a nonlinear activation function to yield updated representations, which are often referred to as activations or feature maps. The loss function (also known as an objective function or empirical risk) can often be calculated by comparing the output of the neural network and the known target value data.

Feedforward networks, such as the neural network 1200 depicted in the embodiment of FIG. 12, are often configured as neural networks where information moves in one direction, from the input layer through the hidden layers to the output layer, without any cycles or loops. They are primarily used for tasks such as classification, regression, and simple pattern recognition, where each input is processed independently of others. In contrast, backpropagation is not a separate type of network but rather a training algorithm commonly used in both feedforward and other types of networks, like recurrent neural networks (RNNs).

Backpropagation involves adjusting the weights of the network in the reverse direction (from output to input) based on the error between the predicted output and the actual target during training. While feedforward describes the structure and data flow within the network, backpropagation is a technique used to optimize the model. Feedforward networks are ideal for straightforward tasks where input-output relationships are not sequential or time-dependent. However, for problems involving learning complex patterns over time, such as speech recognition or time-series analysis, networks that leverage backpropagation for training, like RNNs or deep feedforward networks with many hidden layers, become necessary to capture these intricate dependencies.

Typically, in these network arrangements, the weights are iteratively updated via various methods including, but not limited to, stochastic gradient descent algorithms in order to help minimize the loss function until the desired accuracy is achieved. Most modern deep learning frameworks can facilitate this by using reverse-mode automatic differentiation to obtain the partial derivatives of the loss function with respect to each network parameter through recursive application of the chain rule. Colloquially, this is also known as back-propagation. Common gradient descent algorithms can include, but are not limited to, Stochastic Gradient Descent (SGD), Adam, Adagrad etc. The learning rate is an important parameter in gradient descent. Except for SGD, all other methods use adaptive learning parameter tuning. Depending on the objective such as classification or regression, different loss functions such as Binary Cross Entropy (BCE), Negative Log Likelihood Loss (NLLL) or Mean Squared Error (MSE) can be used.

Neural network architecture is commonly used for a wide range of tasks in fields such as computer vision, natural language processing, financial forecasting, and materials science. For instance, it can be employed to recognize patterns in images, such as identifying objects or faces, or to classify text into categories, like spam detection in emails. It is also useful in regression problems, such as predicting stock prices or energy consumption, where input features can be processed to output continuous values. However, this is a general example of an artificial intelligence (AI) model, illustrating how a feedforward neural network works. Depending on the problem, other methods and models may be more appropriate. For example, convolutional neural networks (CNNs) are often used for image processing tasks, while recurrent neural networks (RNNs) are suitable for sequential data like time series data or text. Additionally, simpler models like linear regression, decision trees, or support vector machines (SVMs) may be sufficient if the problem is less complex, or the dataset is relatively small. The embodiment depicted in FIG. 12 is presented as an exemplary ML solution that may be deployed within one or more methods or systems described herein.

In many embodiments, the input layer 1210 is the first layer in a neural network 1200 and serves as the initial point where raw data is introduced into the model. Each node (or neuron) in this layer represents an individual feature or variable from the dataset, allowing the network to receive and process various types of data, such as pixel values in an image, numerical features in a spreadsheet, or words in a text document. For instance, in image recognition tasks, the input layer can consist of nodes that correspond to the pixel values of the image, providing the network with the visual information needed to identify objects or patterns. The number of nodes in the input layer directly depends on the number of features present in the dataset. If there are one-hundred features in the data, the input layer will typically have one-hundred nodes, each conveying one piece of the information to the subsequent layers. In more embodiments, the inputs of the neural network 1200 are generally scaled i.e., normalized to have a zero mean and/or unit standard deviation. Scaling can also be applied to the input of hidden layers (using batch or layer normalization) to improve the stability of neural network 1200.

Unlike the hidden layers 1220 and output layers 1230, the input layer 1210 typically does not perform any computations or transformations on the data. Its primary function is often to pass the input data to the next layer in the network, the first hidden layer 1221. However, it is often desired that the data fed into this layer is preprocessed appropriately, such as being normalized or standardized, to ensure that the neural network can learn efficiently. Proper preprocessing, like scaling numerical values or encoding categorical variables, can help the network process data uniformly, facilitating more stable and faster convergence during training.

The input layer's design depends on the nature of the problem. For example, in natural language processing, the input layer may represent words encoded as numerical vectors, while in time-series analysis, each node might represent a data point in a sequence. While the input layer 1210 itself does not modify the data, it sets the stage for the neural network to extract complex patterns and relationships through the deeper layers. This flexibility in handling various types of input make the neural network 1200 a powerful tool for a diverse set of applications.

With respect to the embodiments described herein, the input layer may be configured with a plurality of inputs providing timeline data 1250, player attributes/parameters or other data sources. For example, a model can be configured with a first input 1211 configured as a first potential location in the game, a second input 1212 is configured with a second potential location, while additional inputs can be added related to the number of potential locations for pinch points or scrubbing locations in the timeline system. The nth input 1215 can be configured in certain embodiments to include data related to the case that no pinch points are located if such a determination may be possible. However, as those skilled in the art will recognize, additional setups can be configured such that the inputs can be configured to also include different parameters of the timeline, the number of assets or points of interest in the scene, known spoilers, available branches, among other input types, etc.

In a number of embodiments, the neural network 1200 comprises a plurality of hidden layers 1220. The embodiment depicted in FIG. 12 comprises a first hidden layer 1221, a second hidden layer 1222, and an nth hidden layer 1225, which are denoted as hi, h₂, and hₙ respectively. In many embodiments, the hidden layers 1220 are where the core of the model's learning and pattern recognition occurs. In each hidden layer, individual neurons receive inputs from the previous layer, apply a set of weights, add a bias, and pass the result through an activation function (e.g., ReLU, leaky ReLU, sigmoid, hyperbolic tangent (tanh), Swish, etc.). This process can introduce non-linearity, allowing the network to capture complex patterns in the data that simple linear models cannot. The intricate web of connections among neurons across layers helps the network transform and process input features into representations that become progressively more abstract and useful for making predictions.

The first hidden layer 1221 h₁ receives direct input from the input layer, transforming the raw data into an initial set of features. For example, in an image recognition task, this layer might begin identifying basic patterns, such as edges or simple textures. The output of the first hidden layer 1221 is then passed to a second hidden layer 1222 h₂, which builds upon the features identified by the first hidden layer 1221. This deeper layer might start recognizing more complex patterns, such as shapes or specific object components, by combining the lower-level features identified earlier. This can continue on until a last, nth hidden layer 1225 hₙ continues this abstraction process, allowing the network to recognize even higher-level, more detailed features, such as identifying an entire object within an image or understanding intricate relationships in the input data.

Each hidden layer adds a level of complexity and abstraction to the network's learning capabilities. The multi-layer structure can enable the network to move from recognizing simple patterns in the first input layer 1221 to highly complex, abstract concepts in the deeper layers. The number of hidden layers and neurons within them can vary depending on the problem's complexity. More hidden layers generally allow the network to model more intricate functions, making deep neural networks especially effective for tasks like image recognition, natural language processing, and complex predictive modeling. However, adding more layers also increases the computational demand and the risk of overfitting, highlighting the need to carefully design and tune these hidden layers for optimal performance.

In various embodiments, the output layer 1230 is often the final layer in a neural network and is responsible for producing the network's predictions or classifications based on the information processed through the previous hidden layers 1220. Each neuron in the output layer 1230 can represent a specific outcome or category that the model can predict. In the embodiment depicted in FIG. 12, the outputs are labeled as "output 1" to "output n," indicating that the network can be designed to have a varying number of outputs depending on the nature of the problem being solved for. For example, in a binary classification task (e.g., setting a pinch point vs. not setting a pinch point), there would typically be a single output neuron that provides a probability score for one of the two classes/outcomes. In contrast, for multi-class classification (e.g., categorizing a location within the timeline that is suitable for adding a pinch point, etc.), the output layer would contain multiple neurons, each corresponding to a different class.

The number of neurons in the output layer 1230 can also designed specifically for other types of tasks, such as regression, where the model can predict continuous values. In such cases, the output layer 1230 might contain a single neuron representing a numerical prediction, such as the price of a house or the temperature forecast, etc. Alternatively, in complex applications like multi-label classification (where each input can belong to multiple classes simultaneously), the output layer 1230 could have multiple neurons, each representing a different class, with each neuron outputting a probability of the input belonging to that specific class.

The activation function used in the output layer can vary based on the desired output. For binary classification, a sigmoid function is commonly used to produce a probability between 0 and 1. For multi-class classifications, a SoftMax function can be applied to output a set of probabilities that sum to 1, indicating the most likely class. For regression problems, a linear activation function is often used to output a continuous range of values. The flexibility in designing the output layer allows the neural network 1200 to be applied to a wide variety of tasks, from simple binary decisions to complex multi-output predictions, making them a versatile tool in artificial intelligence and machine learning.

Although a specific embodiment for an exemplary neural network suitable for carrying out the various steps, processes, methods, and operations described herein is discussed with respect to FIG. 12, any of a variety of systems and/or processes may be utilized in accordance with embodiments of the disclosure. For example, real-world neural networks are often far more complex, featuring many more layers, nodes, and connections than the simplified structure shown in the embodiment depicted in FIG. 12, which is an illustrative example meant to make it easier to explain the basic concepts of neural networks and how they process information. The specific features and functions described herein are not intended to be limiting to this specific embodiment. Additionally, the elements depicted in FIG. 12 may also be interchangeable with other elements of FIGS. 1-11 as required to realize a particularly desired embodiment.

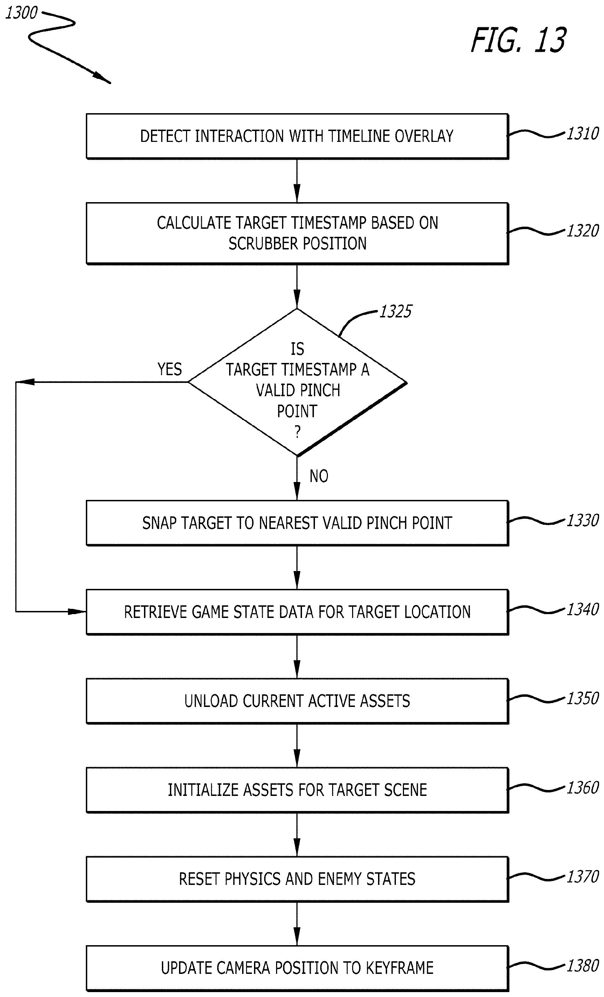

Referring to FIG. 13, a flowchart depicting a process 1300 for runtime scrubbing and asset reset in accordance with various embodiments of the disclosure is shown. In many embodiments, the process 1300 can detect interaction with timeline overlay (block 1310). For example, the user might click and drag a cursor across a visual bar located at the bottom of the display screen using a mouse or trackpad. In other situations, the interaction may be detected via a touch interface where the user physically drags their finger across the timeline overlay on a tablet or smartphone. In yet other scenarios, the interaction might be registered through a controller input, such as using the left or right bumpers to scrub through the timeline overlay in increments or holding a joystick to scroll continuously. Additionally, voice commands or gesture-based inputs could be interpreted as interactions intended to manipulate the position within the timeline overlay.

In a number of embodiments, the process 1300 can calculate target timestamp based on scrubber position (block 1320). This calculation often involves mapping the horizontal pixel coordinates of the input interaction to a specific time value relative to the total duration of the game or the current level. For instance, if the scrubber position is exactly in the middle of the timeline overlay, the system might calculate a target timestamp that corresponds to the halfway point of the narrative arc. Alternatively, the calculation might be non-linear, where certain segments of the timeline overlay represent larger or smaller portions of time depending on the density of gameplay events or narrative importance. It is contemplated that the system may also apply a smoothing algorithm to the input data to prevent jittery timestamp calculations if the user's hand is unsteady during the interaction.

In more embodiments, the process 1300 can determine if target timestamp is a valid pinch point (block 1325). This check may involve querying a database or lookup table that lists all designated safe entry locations within the game structure. If the calculated timestamp falls within a range that is not designated as safe, such as the middle of a complex physics simulation or an uninterruptible animation sequence, the process 1300 can determine that the location is invalid. However, if the target timestamp aligns with a predefined marker, such as the start of a cutscene or a checkpoint, then the process 1300 can retrieve game state data for target location (block 1340). In a non-limiting example, the system might check metadata associated with the timestamp to verify if all necessary assets and logic states are available for immediate loading.

If it is determined that the target timestamp is not a valid pinch point, then the process 1300 can snap target to nearest valid pinch point (block 1330). In some embodiments, this involves rounding down the timestamp to the most recent valid pinch point that occurred prior to the selected time. For example, if a player tries to scrub to a point ten seconds after a boss fight begins, the system may default back to the cinematic introduction immediately preceding the fight. In other situations, the system might look forward to the next available valid pinch point if the user is scrubbing rapidly towards future content. It is further contemplated that the system could present a visual indicator, such as a magnet-like animation, to show the user that their selection is being adjusted to a safe entry location.

In additional embodiments, the process 1300 can retrieve game state data for target location (block 1340). This retrieval often involves accessing a stored file or data structure that contains all the necessary variables to reconstruct the game world at that specific moment. For instance, the data might include the player's health, inventory, current objective status, and the positions of key non-player characters. In cloud-based gaming environments, this step might involve fetching a delta snapshot from a remote server that describes the difference between the current state and the target state. Alternatively, for local processing, the system might load a serialized JSON or binary file from the hard drive that defines the parameters of the chosen valid pinch point.

In still more embodiments, the process 1300 can unload current active assets (block 1350). This step is often crucial for freeing up system memory, such as VRAM, to accommodate the new assets required for the target scene. For example, the system might purge high-resolution textures, audio files, and 3D models that are unique to the area the player is leaving. In some alternative approaches, the system might utilize a smart caching system that retains common assets, such as the main character model or user interface elements, while only discarding environment-specific data. This selective unloading can help reduce the loading times required to transition between vastly different sections of the game.

In yet further embodiments, the process 1300 can initialize assets for target scene (block 1360). Once the memory has been cleared, the system can begin streaming in the geometry, textures, and scripts required for the new location. For instance, if the player has scrubbed back to a forest level, the system will load the tree models, foliage textures, and ambient nature sounds associated with that environment. In situations where speed is prioritized, the system might load lower-resolution proxy assets first to allow the scene to render immediately, and then swap them for higher-quality versions in the background. It is also contemplated that this initialization phase involves recompiling shaders or lighting maps to match the time of day or atmospheric conditions of the target timestamp.

In still additional embodiments, the process 1300 can reset physics and enemy states (block 1370). This ensures that the gameplay environment is consistent with the narrative moment being revisited, rather than inheriting the chaotic state of a previous session. For example, the system might zero out the velocity of all rigid bodies and reset the position of moveable crates or obstacles to their default locations. Similarly, enemy artificial intelligence routines may be reset to their idle or patrol states, ensuring they are not in the middle of an attack animation when the scene loads. In a non-limiting example, this step might also involve clearing any active projectiles, particle effects, or debris that were present in the memory buffer to prevent visual artifacts.

In yet more embodiments, the process 1300 can update camera position to keyframe (block 1380). The system typically moves the player's view to a specific coordinate and rotation defined by the pinch point data to ensure a cinematic or logical starting perspective. For instance, the camera might be placed behind the player character's shoulder or at a fixed angle used for a specific cutscene. In some embodiments, the system might interpolate the camera movement smoothly if the jump is short, creating a fast-forward or rewind effect. In other configurations, the camera settings, such as field of view, focal length, and exposure, are also instantly adjusted to match the artistic direction of the target scene.

Although a specific embodiment for a process 1300 for runtime scrubbing and asset reset suitable for carrying out the various steps, processes, methods, and operations described herein is discussed with respect to FIG. 13, any of a variety of systems and/or processes may be utilized in accordance with embodiments of the disclosure. For example, the order of asset unloading and initialization could be reversed or performed in parallel depending on the available system resources and threading capabilities. The elements depicted in FIG. 13 may also be interchangeable with other elements of FIGS. 1-12 and FIGS. 14-15 as required to realize a particularly desired embodiment.

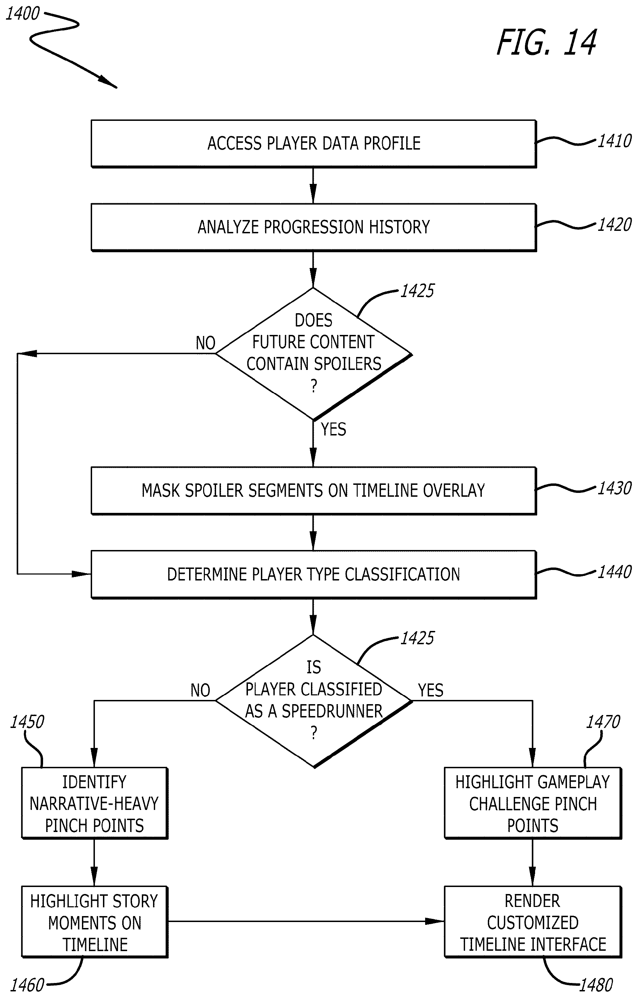

Referring to FIG. 14, a flowchart depicting a process 1400 for adaptive timeline generation based on player data in accordance with various embodiments of the disclosure is shown. In many embodiments, the process 1400 can access player data profile (block 1410). This step typically involves retrieving a structured dataset associated with the current user that contains their preferences, statistics, and historical interactions with the game. In some embodiments, the process 1400 might load this profile from a local storage drive on the console or PC, ensuring quick access without network latency. For instance, the system could read a JSON or XML file stored in the user's document folder that flags their previous completion status. In other alternative approaches, the profile might be fetched from a remote cloud server, allowing the player's preferences to persist across different devices. In a non-limiting example, a player logging into a friend's console would have their specific timeline preferences downloaded and applied automatically.

In a number of embodiments, the process 1400 can analyze progression history (block 1420). This analysis often entails scanning the player data profile to determine exactly which narrative beats, levels, or objectives have been successfully completed. In certain embodiments, the system compares the player's highest reached checkpoint against the total list of available pinch points in the game's database. For example, the logic might verify if the "Chapter 3 Boss" flag is set to true. In further embodiments, the analysis might be more granular, tracking not just completion but also which specific optional cutscenes or dialogue trees were triggered. It is contemplated that this step creates a map of "safe" content versus "unknown" content relative to the user's experience.

In further embodiments, the process 1400 can determine if future content contains spoilers (block 1425). This decision is generally based on the comparison performed during the analysis of the progression history. If the timeline overlay includes pinch points that occur chronologically after the player's furthest point of progression, the system identifies these as potential spoilers. For instance, a pinch point labeled "The Hero's Betrayal" would be flagged as a spoiler if the player is still in the early stages of the game. However, if the player has already beaten the game or is in a "New Game Plus" mode, the system may determine that no spoilers exist. If it is determined that future content does not contain spoilers, the process 1400 can proceed to evaluate the player type (block 1440).

However, if it is determined that future content contains spoilers, the process 1400 can mask spoiler segments on timeline overlay (block 1430). In various embodiments, this masking involves visually obscuring specific sections of the timeline bar or preventing the preview frames from loading for those timestamps. For example, the system might render a "fog of war" effect over the unexplored sections of the timeline overlay, effectively hiding the number of remaining chapters. In other instances, the system might replace specific thumbnail images with a generic "locked" icon or a question mark to hide visual plot twists while still showing the length of the game. It is also contemplated that the system might disable the ability to click or scrub into these masked regions entirely until the player reaches them naturally.

In additional embodiments, the process 1400 can determine player type classification (block 1440). This classification helps the system tailor the visual hierarchy of the timeline to suit the user's specific playstyle or goals. In some embodiments, this determination is made based on explicit user selection in a settings menu, such as choosing a "Story Mode" or "Speedrun Mode" preference. In other embodiments, the system might heuristically derive this classification by analyzing the player's past behavior, such as their average time per level or their tendency to skip dialogue. For instance, if a player consistently skips cutscenes, the system might tag them as a gameplay-focused user rather than a narrative-focused user.

In yet further embodiments, the process 1400 can determine if player classified as a speedrunner (block 1425). Note that while the block text in the figure is phrased as a question, the logic functions to bifurcate the process based on the tag applied in the previous step. If the player is identified as a speedrunner, the system prioritizes efficiency and mechanical challenges. For example, the system looks for a metadata tag "PlayerType: Speedrunner" within the active session data. If this tag is present, the process moves to highlight gameplay-specific points. However, if the player is not classified as a speedrunner (e.g., they are a "Completionist" or "Explorer"), the process defaults to a narrative-centric presentation.

If the player is not classified as a speedrunner, the process 1400 can identify narrative-heavy pinch points (block 1450). This step involves filtering the available pinch points to find those associated with major story events, cutscenes, or dialogue sequences. In some embodiments, the system scans the event data for markers tagged as "Cinematic" or "Lore Essential." For instance, a pinch point located at the start of a ten-minute ending sequence would be identified as narrative-heavy. In contrast, a pinch point at the start of a generic grinding area might be ignored or de-emphasized in this context.

In some embodiments, the process 1400 can highlight story moments on timeline (block 1460). Once the relevant points are identified, the system visually accentuates them on the user interface to draw the player's attention. In various embodiments, this highlighting might involve making the markers for story events larger, brighter, or golden in color compared to standard markers. For example, the timeline overlay might display a book or filmstrip icon above these specific timestamps. In other approaches, the segments between these narrative pinch points might be color-coded to represent "Story Chapters," making it easier for the player to navigate the narrative structure.

However, if the player is classified as a speedrunner, the process 1400 can highlight gameplay challenge pinch points (block 1470). In these scenarios, the system emphasizes moments related to skill checks, boss battles, or practice areas. In certain embodiments, the system filters for pinch points tagged as "Boss Start," "Time Trial," or "Skip Opportunity." For instance, the timeline overlay might display a skull icon or a stopwatch symbol at these locations, allowing the speedrunner to quickly practice specific difficult segments. Additionally, the system might display splits or best-time statistics directly on the timeline overlay near these challenge points.

In many further embodiments, the process 1400 can render customized timeline interface (block 1480). This final step involves drawing the graphical user interface elements to the screen based on the previous filtering and masking decisions. In some embodiments, the system generates a dynamic texture for the timeline bar that incorporates the masked regions and specific highlights. For example, the timeline might appear as a simple blue bar for a standard player, but as a detailed, icon-rich roadmap for a completionist. The rendering process ensures that the tooltips, preview frames, and interactive zones align perfectly with the customized visual representation.

Although a specific embodiment for a process 1400 for adaptive timeline generation based on player data suitable for carrying out the various steps, processes, methods, and operations described herein is discussed with respect to FIG. 14, any of a variety of systems and/or processes may be utilized in accordance with embodiments of the disclosure. For example, the player type classification could be dynamic, changing in real-time as the player's behavior changes during a session, rather than being set once at the beginning. Additionally, while the classification associated with FIG.14 is focused on speedrunning, there could be other classifications that yield a different result in varying classifications. The elements depicted in FIG. 14 may also be interchangeable with other elements of FIGS. 1-13 and FIG. 15 as required to realize a particularly desired embodiment.

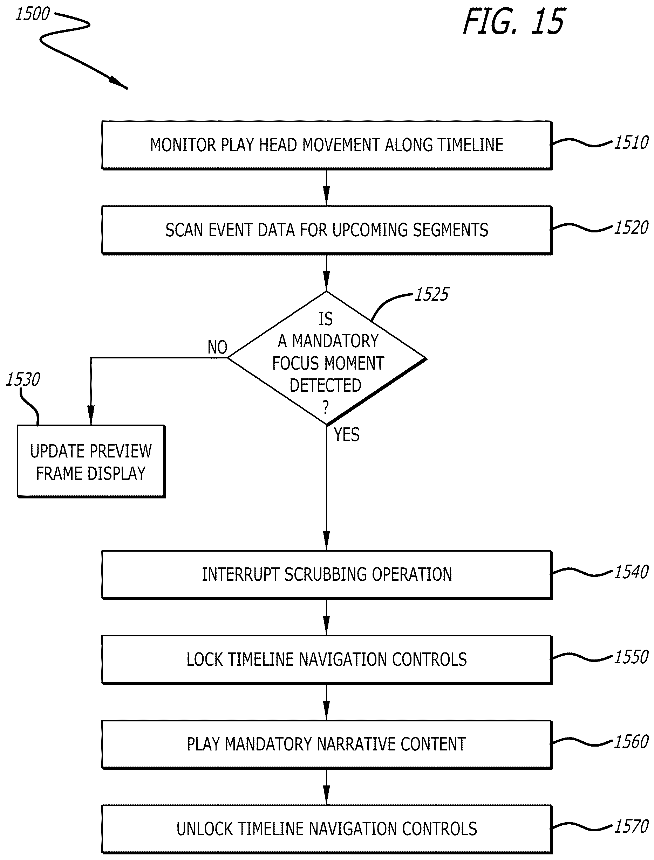

Referring to FIG. 15, a flowchart depicting a process 1500 for focus moment enforcement during navigation in accordance with various embodiments of the disclosure is shown. In many embodiments, the process 1500 can monitor play head movement along timeline (block 1510). This monitoring typically involves tracking the velocity, direction, and current timestamp of the user's input as they manipulate the scrubber. In some embodiments, the system detects if the player is slowly advancing frame-by-frame or rapidly skipping through large sections of the game content. For example, the logic might calculate the delta between the play head's position in the previous frame and the current frame to determine the scrubbing speed. In other alternative approaches, the process 1500 monitors for specific input patterns, such as a user repeatedly scrubbing back and forth over a specific area, which might indicate confusion or interest.

In further embodiments, the process 1500 can scan event data for upcoming segments (block 1520). The scanning operation generally involves looking ahead in the game's data stream or manifest file to identify tags associated with future timeline segments. In certain embodiments, the system reads metadata associated with the next few minutes of gameplay relative to the current play head position. For instance, the process 1500 might query an event database to see if any "Must View" flags are present in the chronological path of the scrubber. This predictive scanning ensures that the system can react proactively before the user actually skips past a critical narrative beat.

In additional embodiments, the process 1500 can determine if a mandatory focus moment is detected (block 1525). This determination is based on the results of the scanning step, specifically checking if the play head is about to cross a timestamp marked as essential. If it is determined that no mandatory focus moment is detected, then the process 1500 can update preview frame display (block 1530). However, if a mandatory focus moment is detected, then the process 1500 can interrupt scrubbing operation (block 1540). It is contemplated that a mandatory focus moment might be a crucial plot twist, a tutorial explanation, or a branding sequence that the developer intends for all players to experience.

In some embodiments, the process 1500 can update preview frame display (block 1530). This update typically involves refreshing the visual feedback provided to the user, such as a thumbnail or a full-screen preview, to match the current timestamp of the play head. In various embodiments, the system renders a low-resolution snapshot of the game world at that specific moment to help the user orient themselves. For example, as the user drags the bar, the preview window updates in real-time to show the changing environment or character positions. If no focus moment blocks the path, this visual update provides a seamless navigation experience similar to a standard video player.

In various embodiments, the process 1500 can interrupt scrubbing operation (block 1540). This interruption physically stops the movement of the play head, effectively overriding the user's manual input control. In some embodiments, the system applies a "hard stop" where the scrubber refuses to advance past the specific timestamp of the focus moment, regardless of how far the user drags the input device. For instance, the interface might provide a visual bounce-back effect or a haptic vibration to signal that a barrier has been reached. In other configurations, the interruption pauses the scrubbing logic and prepares the engine to transition from a navigation state to a playback state.

In more embodiments, the process 1500 can lock timeline navigation controls (block 1550). Locking the controls ensures that the user cannot bypass the content once the interruption has occurred. In certain embodiments, the system temporarily disables the input mappings for the scrubber, the fast-forward buttons, and the skip functions. For example, the timeline overlay might turn gray or display a lock icon to visually indicate that navigation is currently restricted. This lockout prevents the player from accidentally or intentionally skipping the mandatory content while it is being presented.

In still more embodiments, the process 1500 can play mandatory narrative content (block 1560). This step involves initiating the playback of the cutscene, dialogue sequence, or scripted event that was identified as a focus moment. In some embodiments, the game transitions from the timeline overlay view directly into the cinematic sequence. For instance, the system might fade out the UI elements and play the video clip in full screen. In other scenarios, the narrative content might play in a picture-in-picture mode or strictly via audio while the timeline remains visible but inactive.

In yet further embodiments, the process 1500 can unlock timeline navigation controls (block 1570). Once the mandatory content has finished playing or a specific "viewed" flag has been set, the system restores full control to the user. In various embodiments, the input mappings for the scrubber and navigation buttons are re-enabled, allowing the player to continue moving forward or backward. For example, the visual lock indicator disappears, and the play head becomes responsive to mouse or controller input again. It is also contemplated that the system updates the user's progression profile to ensure that this specific focus moment does not trigger an interruption again in the future.

Although a specific embodiment for a process 1500 for focus moment enforcement during navigation suitable for carrying out the various steps, processes, methods, and operations described herein is discussed with respect to FIG. 15, any of a variety of systems and/or processes may be utilized in accordance with embodiments of the disclosure. For example, the system might allow for an optional "skip anyway" function after a certain delay, rather than strictly enforcing the full duration of the content. The elements depicted in FIG. 15 may also be interchangeable with other elements of FIGS. 1-14 as required to realize a particularly desired embodiment.

Although the present disclosure has been described in certain specific aspects, many additional modifications and variations would be apparent to those skilled in the art. In particular, any of the various processes described above can be performed in alternative sequences and/or in parallel (on the same or on different computing devices) in order to achieve similar results in a manner that is more appropriate to the requirements of a specific application. It is therefore to be understood that the present disclosure can be practiced other than specifically described without departing from the scope and spirit of the present disclosure. Thus, embodiments of the present disclosure should be considered in all respects as illustrative and not restrictive. It will be evident to the person skilled in the art to freely combine several or all of the embodiments discussed here as deemed suitable for a specific application of the disclosure. Throughout this disclosure, terms like "advantageous", "exemplary" or "example" indicate elements or dimensions which are particularly suitable (but not essential) to the disclosure or an embodiment thereof and may be modified wherever deemed suitable by the skilled person, except where expressly required. Accordingly, the scope of the disclosure should be determined not by the embodiments illustrated, but by the appended claims and their equivalents.

Any reference to an element being made in the singular is not intended to mean "one and only one" unless explicitly so stated, but rather "one or more." All structural and functional equivalents to the elements of the above-described preferred embodiment and additional embodiments as regarded by those of ordinary skill in the art are hereby expressly incorporated by reference and are intended to be encompassed by the present claims.

Moreover, no requirement exists for a system or method to address each and every problem sought to be resolved by the present disclosure, for solutions to such problems to be encompassed by the present claims. Furthermore, no element, component, or method step in the present disclosure is intended to be dedicated to the public regardless of whether the element, component, or method step is explicitly recited in the claims. Various changes and modifications in form, material, workpiece, and fabrication material detail can be made, without departing from the spirit and scope of the present disclosure, as set forth in the appended claims, as might be apparent to those of ordinary skill in the art, are also encompassed by the present disclosure.

## Claims

1. A device, comprising:
a processor; and
a memory communicatively coupled to the processor, wherein the memory stores a pinch point logic that, when executed by the processor, configures the device to:
receive game data associated with an interactive game;
analyze the game data to determine one or more contained areas within the interactive game;
generate at least one pinch point for each of the one or more contained areas; and
package the at least one pinch point into a pinch point dataset.

2. The device of claim 1, wherein the one or more contained areas are locations where progression within the interactive game requires a player to pass through.

3. The device of claim 1, wherein the pinch point logic is further configured to identify a cutscene within the game data.

4. The device of claim 3, wherein the pinch point logic is further configured to determine if a space exists between distinct dialogue portions of the cutscene.

5. The device of claim 4, wherein the pinch point logic is further configured to generate at least one dialogue pinch point at the space between the distinct dialogue portions in response to determining the space exists.

6. The device of claim 5, wherein the pinch point dataset is configured to further include the at least one dialogue pinch point.

7. The device of claim 6, wherein the pinch point dataset is configured for utilization within an interactive game.

8. The device of claim 6, wherein the pinch point dataset is configured for utilization within an interactive game development environment.

9. The device of claim 1, wherein the pinch point logic is further configured to analyze a plurality of branching paths within the game data to identify a specific location where the plurality of branching paths funnel back into a unified track, and designate the specific location as one of the one or more contained areas.

10. The device of claim 1, wherein the pinch point logic is further configured to identify a mandatory gameplay challenge within the game data, wherein the mandatory gameplay challenge comprises a boss battle or a mandatory puzzle.

11. The device of claim 1, wherein the pinch point logic comprises a trained machine learning model configured to predict the one or more contained areas based on historical player progression data.

12. A timeline control system, comprising:
a processor; and
a memory communicatively coupled to the processor, wherein the memory stores a timeline control logic that, when executed by the processor, configures the timeline control system to:
generate a timeline overlay;
detect a user interaction with the timeline overlay;
access a pinch point dataset representing mandatory progression moments;
determine if the user interaction aligns with the pinch point dataset;
snap a target timestamp to a pinch point in response to determining the user interaction does not align with the pinch point dataset; and
update a game state to reflect a nearest valid pinch point.

13. The timeline control system of claim 12, wherein the timeline overlay is associated with an active gameplay session.

14. The timeline control system of claim 13, wherein the user interaction indicates a target timestamp.

15. The timeline control system of claim 14, wherein the pinch point dataset comprises a plurality of valid pinch points.

16. The timeline control system of claim 15, wherein mandatory progression moments are represented by the plurality of valid pinch points.

17. The timeline control system of claim 16, wherein the target timestamp aligns with one of the plurality of valid pinch points.

18. The timeline control system of claim 17, wherein the timeline control logic is configured to snap the target timestamp to a nearest valid pinch point in response to determining the target timestamp does not align with one of the plurality of valid pinch points.

19. The timeline control system of claim 18, wherein the game state is updated to the nearest valid pinch point.

20. A method for automatic pinch point generation, comprising:
receiving, by a device, game data associated with an interactive game;
analyzing, by the device, the game data to determine one or more contained areas within the interactive game;
generating, by the device, at least one pinch point for each of the one or more contained areas; and
packaging, by the device, the at least one pinch point into a pinch point dataset.
